# EUROPEAN PATENT SPECIFICATION

(11) **EP 3 714 397 B1**
(45) Date of publication and mention of the grant of the patent: **17.06.2026**
(21) Application number: 18880323.3
(22) Date of filing: 23.11.2018
(51) Int. Cl.: G06V 20/00, G06V 10/80, G06V 10/764, G06V 10/44, G06F 18/25, G06N 3/08, G06N 3/045, G06N 3/09, G06N 3/0464, G06Q 30/018

(54) **METHOD AND SYSTEM FOR IDENTIFYING AUTHENTICITY OF AN OBJECT**
VERFAHREN UND SYSTEM ZUR ECHTHEITSPRÜFUNG EINES OBJEKTS
PROCÉDÉ ET SYSTÈME D'IDENTIFICATION DE L'AUTHENTICITÉ D'UN D'OBJET

(30) Priority: 24.11.2017 FI 20176056; 06.07.2018 FI 20185631
(43) Date of publication of application: 30.09.2020
(73) Proprietor: Truemed Oy, 00180 Helsinki (FI)
(72) Inventor: HEIKEL, Oskari, 00180 Helsinki (FI); PALOHEIMO, Olli-Heikki, 00180 Helsinki (FI); KANNAS, Tuomas, 00180 Helsinki (FI); OLLONEN, Annika, 00180 Helsinki (FI); LATVALA, Hemmo, 00180 Helsinki (FI)
(74) Representative: Primrose Oy
(86) International application number: PCT/FI2018/050853
(87) International publication number: WO 2019/102072

(56) References cited:
- WO-A1-2016/077934
- WO-A1-2016/077934
- US-A1- 2015 269 593
- US-A1- 2015 269 593
- US-A1- 2017 032 285
- US-A1- 2017 032 285
- US-A1- 2017 091 579
- US-A1- 2017 091 579

## Description

### FIELD OF THE INVENTION

The present invention relates to a method for identifying authenticity of an object more particularly to the according to preamble of claim 1. The present invention further relates to a system for identifying authenticity of an object and more particularly to a system according to preamble of the claim 15.

### BACKGROUND OF THE INVENTION

Counterfeit objects or products, such as pharmaceutical product, are an increasing problem and battle against counterfeits is becoming increasingly difficult. In many cases the counterfeit products, such as medicines, may subject health of users under danger. There exist many conventional methods for marking original products or goods such that they could be identified as authentic original products. These conventional comprise hologram stickers, special seals and tracking numbers which may be placed on packaging of products. However, identifying these conventional markers as authentic requires special skills preventing utilizing them in large scale. There also exist digital methods for marking original products or goods such that they could be identified as authentic original products. These conventional digital methods comprise RFID tags or the like means for digital tracking of products. However, these digital methods are expensive to produce and require extra work when utilized in large volumes.

For example: US 2017/032285 Al performs authenticating physical objects using machine-learning classifiers trained on microscopic image features, combining multiple feature analyses via voting or probabilistic decision mechanisms; and WO 2016/077934 A1 determines product authenticity by extracting chaotic image signatures from regions of interest and aggregating probabilities from multiple features and images until a confidence threshold is reached.

One of the problems associated with the prior art identification methods and means is they always require extra work phases carried out during production process or packing process. Furthermore, the prior art methods also require adding something, such as stickers, tags or seals, to the product. One further disadvantage is that these conventional methods are usually carried out by an external producer or service provider. Therefore, the brand owner or company which actually owns the product cannot control and execute the authenticity identification from start to finish by itself. Furthermore, the consumers and users of the products cannot determine by themselves if the product is authentic or not, based on these conventional methods. Therefore, the conventional methods do not prevent consumers from using counterfeit objects or products.

### BRIEF DESCRIPTION OF THE INVENTION

An aim of the present invention is to provide a method and system so as to solve or at least alleviate the prior art disadvantages.

The aims of the invention are achieved with a method for identifying authenticity of an which is characterized by what is stated in claim 1.

The preferred embodiments of the invention are disclosed in the dependent claims.

The invention is based on the idea of providing a method for identifying authenticity of an object with a user device having a processor and a memory and which the method comprises the steps of:
a) providing in an identification server (20), a reference identification algorithm trained with reference image data of an original object;
b) receiving, in the identification server (20), one or more target images of the object from the user device over a communication network;
c) automatically processing, by utilizing instructions stored in the memory and executed by the processor of the identification server, the one or more target images with the reference identification algorithm trained with the reference image data of the original object;
d) automatically generating, by utilizing the reference identification algorithm and instructions stored in the memory and executed by the processor of the identification server, an authenticity identification output in the identification server; and
e) automatically sending, by utilizing instructions stored in the memory and executed by the processor of the identification server, an authenticity identification response based on the authenticity identification output from the identification server to the user device.

The step a) of providing a reference identification algorithm may comprise providing, in the identification server, two or more feature identification algorithms trained with the reference image data of the original object as the reference identification algorithm for identifying separate features of the original object in the identification server and the processing the one or more target images with reference identification algorithm trained with the reference image data of the original object comprises processing, by utilizing instructions stored in the memory and executed by the processor of the identification server, the one or more target images with the two or more feature identification algorithms trained with the reference image data of the original object.

The two or more feature identification algorithm provides the possibility to identify multiple features of the object presented in the one or more target images. The features can be for example a logo, a text, a colour, a shape, a structure or dimension. This improves the authenticity identification process to become faster and more reliable.

The method may further comprise processing, by utilizing instructions stored in the memory and executed by the processor of the identification server, the one or more target images with at least two of the two or more feature identification algorithms in parallel; generating, by utilizing at least the two or more feature the reference identification algorithms and instructions stored in the memory and executed by the processor of the identification server, an output from each of the two or more feature identification algorithms; and sending, by utilizing instructions stored in the memory and executed by the processor of the identification server, one common authenticity identification response based on the outputs of the two or more feature identification algorithms from the identification server to the user device.

In the step of processing the one or more target images with two or more feature identification algorithms in parallel the one or more target images are processed with different features in different feature identification algorithms and all these feature identification algorithms generate an output such that there are at least two outputs expressing the results of different feature identifications and these outputs are provided as a common output such that the identification server sends a common authenticity identification response to the user device. This step has the benefit that different features can be processed in the feature identification algorithms simultaneously which gives a fast response from the identification server to the user of the user device to inform the user the authenticity of the object.

The method may further comprise processing, by utilizing instructions stored in the memory and executed by the processor of the identification server, the one or more target images with one or more of the two or more feature identification algorithms in series; generating, by utilizing the reference identification algorithm and instructions stored in the memory and executed by the processor of the identification server, an output from the one or more of the two or more feature identification algorithms; and sending, by utilizing instructions stored in the memory and executed by the processor of the identification server, one authenticity identification response based on the outputs of the one or more features identification algorithms from the identification server to the user device.

In the step of processing the one or more target images with two or more feature identification algorithms in series the one or more target images are processed with one feature at a time such that if the first feature is identified as authentic the process continues to the next feature identification algorithm and provides an output from that algorithm. The features are identified one by one until one feature is identified as a non-genuine or until all features are identified as authentic.

The processing the target image with one of the two or more feature identification algorithms may comprise comparing, by utilizing instructions stored in the memory and executed by the processor of the identification server, one feature of the one or more target images with the reference image data utilizing the one of the two or more feature identification algorithms; generating, by utilizing instructions stored in the memory and executed by the processor of the identification server, a first feature authenticity identification output in the identification server; and based on the first feature authenticity identification output:
if the first feature authenticity identification output is not within a preselected range, sending, by utilizing instructions stored in the memory and executed by the processor of the identification server, the authenticity identification response based on the first feature authenticity identification output from the identification server to the user device; or
if the first feature authenticity identification output is within a preselected range, performing comparing, by utilizing instructions stored in the memory and executed by the processor of the identification server, a subsequent feature of the one or more target images with the reference image data utilizing one of the two or more feature identification algorithms; generating, by utilizing instructions stored in the memory and executed by the processor of the identification server, a subsequent feature authenticity identification output in the identification server; and based on the subsequent feature authenticity identification output,
if the subsequent feature authenticity identification output is not within a preselected range sending, by utilizing instructions stored in the memory and executed by the processor of the identification server, the authenticity identification response based on the subsequent feature authenticity identification output from the identification server to the user device; or
if the subsequent feature authenticity identification output is within a preselected range repeating, by utilizing instructions stored in the memory and executed by the processor of the identification server, the comparing the subsequent feature with the reference image data and generating the subsequent feature authenticity identification output as previously explained; or
if the subsequent feature authenticity identification output is within a preselected range sending, by utilizing instructions stored in the memory and executed by the processor of the identification server, a final authenticity identification response based on the subsequent feature authenticity identification output from the identification server to the user device.

The above-mentioned steps provide the process for the feature identification of the one or more target images. In those steps features are compared one feature at a time with the reference image data of the original object utilizing the feature identification algorithms and if the feature is within a preselected range, which can be for example a certain percentage range representing the estimate of authenticity of the object represented in the one or more target images, the process continues to the next feature which is compared to the reference image data of the original object utilizing the feature identification algorithms. The certain percentage range representing the estimate of authenticity of the object can be for example a range of 80-100% meaning that the certainty of the authenticity of the feature in the object is within that range. The features are processed until there exists a feature which is outside the preselected range, i.e. most certainly not authentic or until all the features are processed and found to be in the preselected range.

The one or more target images may be provided with additional data such that the additional data is sent together with the one or more target images to the identification server. The additional data can be for example GPS-coordinates or user information which can be beneficial when tracking counterfeit hot-spots around the world. The one or more target images and additional data may be stored in a target image database as a target image profile in one or more storage devices. The one or more storage device comprising the target image database may be provided in the identification server or separately from the identification server but connected to the identification server in another server.

The method may further comprise in step b) creating, by utilizing instructions stored in the memory and executed by the processor of the identification server, a one or more standardized target images by image pre-processing the one or more target images. The image pre-processing may comprise cropping, by utilizing instructions stored in the memory and executed by the processor of the identification server, the one or more target images; or rotating, by utilizing instructions stored in the memory and executed by the processor of the identification server, the one or more target images; or pre-processing, by utilizing instructions stored in the memory and executed by the processor of the identification server, the one or more target images by digital filtering or affine transformation. In an alternative embodiment, the one or more standardized target images may be provided by creating or automatically creating, by utilizing instructions stored in the user device memory and executed by the user device processor of the user device, a one or more standardized target images by image pre-processing the one or more target images in the user device. Accordingly, the standardization of the one or more target images may be carried out in the user device or in the identification server.

By standardizing the one or more target images, the one or more target images are modified such that the identification of the authenticity of the object is most advantageous with the reference identification algorithm trained with the reference image data of the original object.

The method may further comprise sending, by utilizing instructions stored in the memory of the user device and executed by the processor of the user device, the one or more target images of the object from the user device to the identification server. In one embodiment, the sending is carried out with a user interface in the user device on request by the user of the user device. In the step of sending the one or more target images may be already provided in the memory of the user device.

The method may alternatively comprise taking, by utilizing image taking instructions stored in the memory and executed by the processor in the user device, the one or more target images of the object with imaging device in the user device on request by the user of the user device. The image taking instructions may be provided in the user interface of the user device, which the image taking instructions guide the user of the user device for example to adjust lighting conditions or to adjust an image taking area to match the object such that the object fills the image taking area ideally. The imaging device is preferably an integral camera in the user device.

With the step of taking the one or more target images the user of the user device utilizes image taking instructions in which it is instructed to take the one or more target image of the object such that the object will be shown ideally in the one or more target image so that it is most suitable for processing with the reference identification algorithm. An example of utilizing image taking instructions is that the user is presented with a clear frame in the user interface in which the object must fully be inside of.

Alternatively, the method may comprise taking, by utilizing image taking instructions stored in the memory and executed by the processor in the user device, the one or more target image of the object with imaging device in the user device on request by the user of the user device and sending, by utilizing instructions stored in the memory of the user device and executed by the processor of the user device, the one or more target image of the object from the user device to the identification server.

The method may further comprise storing, by utilizing image taking instructions stored in the memory and executed by the processor in the user device, the one or more target image of the object in a target image database in the identification server or in one or more storage devices.

The method may further comprise providing, by utilizing instructions stored in the memory and executed by the processor in the user device, an identifier for the object in the user interface on request by the user of the user device; sending, by utilizing instructions stored in the memory of the user device and executed by the processor of the user device, the one or more target image of the object from the user device to the identification server on request by a user of the user device; connecting, by utilizing instructions stored in the memory and executed by the processor of the identification server, the one or more target image based on the identifier to a object profile in an original object database in the identification server, the original object database being provided in one or more storage devices; and selecting, by utilizing instructions stored in the memory and executed by the processor of the identification server, the reference identification algorithm connected to the object profile.

The providing an identifier means selecting or naming the object from which the one or more target image is taken by the user of the user device such that when the one or more target image together with the identifier is sent to the identification server and the one or more target image based on the identifier is connected to an object profile in the original object database and the reference algorithm is selected based on the identifier which narrows down the scope of the reference data of the original objects from which the reference identification algorithm is generated so that the processing the one or more target image with the reference identification algorithm becomes faster.

The method may further comprise storing, by utilizing instructions stored in the memory and executed by the processor in the user device, the authenticity identification response in a target image database in one or more storage devices in the identification server. Alternatively, the method may further comprise storing, by utilizing instructions stored in the memory and executed by the processor in the user device, the authenticity identification response in the target image database in one or more storage devices connected to the identification server over a communication network.

The method of the present invention may further comprise:
- providing at least one original object database, stored in one or more storage devices, for one or more object profiles, each comprising original object data of an original object;
- creating, with an administrator device, an object profile on a request by an administer for the original object, the object profile comprising original object data of the original object, and storing the object profile to the at least original object database in one or more storage devices;
- receiving an original object video or one or more original object images as reference image data to an identification server over a communication network;
- splitting, by utilizing instructions stored in a memory and executed by a processor of the identification server, the original object video into several separate original images;
- providing a basic identification algorithm from an algorithm service;
- applying, by utilizing instructions stored in the memory and executed by the processor of the identification server, the one or more original images of the separate original images as input data to the basic identification algorithm;
- generating, by utilizing instructions of the algorithm service, from the input data a reference identification algorithm of the original object; and
- connecting, by utilizing instructions stored in the memory and executed by the processor of the identification server, the reference identification algorithm of the original objectto the object profile in the at least one original object database, stored in one or more storage devices.

In the case of receiving, in the identification server, the original object video, the video is split into the separate original images. However, in the case of receiving one or more original images, the splitting step is omitted. It should be noted that the basic identification algorithm may be trained with only one original object image or with two or more original object images.

According to the above mentioned, the method of the present invention enables an administrator, for example a brand owner, upload one or more original object images or an original object video to the identification server and form a reference identification algorithm which may be further utilized for identifying counterfeit objects from original object.

In one embodiment of the present invention the step of creating the object profile comprises:
- creating, with an administrator interface in the administrator device, the object profile on a request by the administer for the original object, the object profile comprising the original object data of the original object;
- storing the object profile to the at least original object database in one or more storage devices;
- generating, by utilizing instructions stored in a memory and executed by a processor of the identification server, object profile generated response; and
- sending, by utilizing instructions stored in a memory and executed by a processor of the identification server, the object profile generated response to the administrator device over the communication network.

In this embodiment, the administrator may create and store a new object profile to the original object database and input object information and data of the original object to the object profile. The reference identification algorithm is connected to the object profile such that each specific reference algorithm is connected to a specific object profile.

In one embodiment, the receiving of the one or more original object images or the original object video as the reference image data to the identification server comprises:
- taking, by utilizing instructions stored in a memory and executed by a processor of the administrator device, the one or more original object images or the original object video of the original object with an imaging device in the administrator device on request of the administrator;
- sending, by utilizing instructions stored in a memory and executed by a processor of the administrator device, the one or more original object images or original object video as the reference image data to the identification server over the communication network; and
- receiving the one or more original object images or the original object video as the reference image data to the identification server over the communication network.

Accordingly, the administrator may take the one or more original object images or the original object video of the original object by itself and upload it to the identification server using the administrator device, such as mobile phone, tablet computer or the like.

In one embodiment of the present invention the splitting of the original object video into the several separate original images comprises splitting, by utilizing instructions stored in a memory and executed by a processor of the identification server, the original object video into video frames to create the several separate original images. This enables splitting the original object video into separate original images such that every frame of the original object video forms a separate original image from each of the video frames maximizing the number of separate original images.

In one embodiment, the method comprises creating, by utilizing instructions stored in the memory and executed by the processor of the identification server, standardized separate original images by image pre-processing the one or more original object images, or the several original images generated from the original objectvideo. Creating the standardized several original images may comprise:
- cropping, by utilizing instructions stored in the memory and executed by the processor of the identification server, the one or more original object images, or rotating, by utilizing instructions stored in the memory and executed by the processor of the identification server, the one or more original object images, or automatically pre-processing, by utilizing instructions stored in the memory and executed by the processor of the identification server, the one or more original object images by digital filtering or affine transformation. Digital filtering may comprise for example adjusting brightness, contrast, structure, noise, colour, sharpness, shadows or saturation of the image. Accordingly, in this embodiment the one or more original object images are manipulated to put them in corresponding or similar form. Standardizing the one or more original object images enables providing high quality and uniform input data to the basic identification algorithm.

In a preferred embodiment, standardizing the one or more target images and standardizing the one or more original object images may be carried out in similar, corresponding or identical manner.

In one embodiment, the providing of the basic identification algorithm comprises providing the basic identification algorithm from an external algorithm service, or providing the basic identification algorithm from external algorithm service comprising a machine learning algorithm such as artificial neural network, such as a convolutional neural network or capsule network. In an alternative embodiment, the providing of the basic identification algorithm comprises providing the basic identification algorithm from algorithm service provided in connection with the identification server, or providing the basic identification algorithm from algorithm service provided in connection with the identification server, the algorithm service comprising basic machine learning algorithm, or basic artificial neural network. Accordingly, the algorithm service may be an external service or internal service provided to the identification server. The algorithm service enables creating reference identification algorithm by training the basic identification algorithm with the one or more standardized original images. This may be carried out by training the basic machine learning algorithm, or the basic artificial neural network with the one or more standardized original object images.

In one embodiment of the present invention, the applying the one or more standardized original object images as input data to the basic identification algorithm, machine learning algorithm, comprises, or generating, by utilizing instructions of the algorithm service, the two or more feature reference identification algorithms for identifying separate features of the original object, or generating, by utilizing instructions of the algorithm service, two or more separate feature reference identification algorithms for identifying separate features of the original object, or generating, by utilizing instructions of the algorithm service, the reference identification algorithm comprising two or more feature reference identification algorithms for identifying separate features of the original object. The reference identification algorithm may comprise or be a combination of two or more feature identification algorithms or consist of two or more separate feature identification algorithms. Each of the feature identification algorithms may be provided and trained to identify one specific feature or characteristic of an object. Accordingly, the identification may be targeted to two or more specific features of the original object based on which the identification of authenticity may be determined, as described above.

In one embodiment, the generating, by utilizing instructions of the algorithm service, of the reference identification algorithm or the two or more feature reference identification algorithms may comprise generating, by utilizing instructions of the algorithm service, a shape reference identification algorithm for identifying shape of the object. This algorithm may be provided to identify or recognize the outer shape or contour of the object such that the shape of the object may be identified.

In an alternative embodiment, the generating of the identification algorithm or the two or more feature reference identification algorithms may comprise generating a visual symbol reference identification algorithm for identifying visual symbols on the object. This algorithm may be provided to identify or recognize graphical symbols or pictures on the surface of the object, such as logos.

In a yet alternative embodiment, the generating of the identification algorithm or the two or more feature reference identification algorithms may comprise generating an optical character recognition reference identification algorithm for identifying shape of the product. This algorithm may be provided to identify or recognize text provided on the surface of the object.

In one embodiment, the method further comprises
- creating, with an administrator device, at least two object sub-profiles on a request by the administer for the original object, the at least two object sub-profiles comprising original object data of the original object, storing the at least two object sub-profiles to the at least original object database in one or more storage devices, and connecting at least two object sub-profiles to each other;
- receiving one or more original object images and an original object video as reference image data to an identification server over a communication network for each of the at least two sub-profiles, respectively;
- splitting, by utilizing instructions stored in a memory and executed by a processor of the identification server, the original object videos into at least two sub-sets of several separate original images, respectively, or dividing the one or more original object images into at least two sub-sets of several separate original images;
- providing a basic identification algorithm from an algorithm service for each of the at least two sub-sets of separate original images;
- applying, by utilizing instructions stored in the memory and executed by the processor of the identification server, each of the at least two sub-sets of separate original images as input data to one basic identification algorithm, respectively;
- generating, by utilizing instructions of the algorithm service, a reference identification algorithm of the original object for each of the at least two sub-sets of separate original images, respectively; and
- connecting, by utilizing instructions stored in the memory and executed by the processor of the identification server, each reference identification algorithm of the original object to respective object sub-profile in the at least one original object database, stored in one or more storage devices. According to the above mentioned, the may be provided two or more separate identification algorithms relating to the original object. Therefore, the identifying of the authenticity of the object may be based on identifying two or more different images of the object or different parts of the object.

In one embodiment, the method further comprises creating, with an administrator device, at least two object sub-profiles on a request by the administer for the original object, the at least two object sub-profiles representing different sides of the original object, or creating, with an administrator device, at least two object sub-profiles on a request by the administer for the original object, the at least two object sub-profiles representing different parts of the original object, such as outer packaging, inner packaging and a product. The inner packaging maybe for example blister pack for medicine pills or the like, and the object may be a medicine pill. These all may be considered as objects. Accordingly, there may be different identification algorithms for different sides or parts of the object such that identifying the authenticity may be carried out based on images of different sides or different parts of the object to be identified. Alternative, the identifying may be based on combination of the separate identification algorithms of the different sub-profiles.

The present invention is further based on the idea of providing an authenticity identifying system for identifying authenticity of an object, which the system comprises:
- a user interface in a user device operable to sending one or more target images over a communication network; and
- an identification server comprising at least one processor and at least one memory, the identification server being operable to:
   receiving the one or more target images of the object from the user device over a communication network;
   automatically processing, by utilizing instructions stored in the memory and executed by the processor, the one or more target images with the reference identification algorithm trained with the reference image data of the original object;
   generating, by utilizing the reference identification algorithm and instructions stored in the memory and executed by the processor, an authenticity identification output in the identification server; and
   sending, by utilizing instructions stored in the memory and executed by the processor, an authenticity identification response based on the authenticity identification output from the identification server to the user device.

The authenticity identifying system may further comprise the user interface in the user device being operable to taking the one or more target images; or the user device may be operable to taking the one or more target images.

The authenticity identifying system may further comprise the user interface in the user device being operable to displaying or indicating the authenticity identification response; or the user device being operable to displaying or indicating the authenticity identification response.

The authenticity identifying system may further comprise the user interface in the user device being operable to providing an identifier for the object and/or user data; or the user device being operable to providing an identifier for the object and/or user data.

The system for identifying authenticity of an object may further comprise:
- an administrator interface, in an administrator device, operable to creating an object profile on a request by an administer for an original object, the object profile comprising original object data of the original object;
- an original object database, stored in one or more storage devices, operable to storing one or more object profiles;
- an algorithm service, operable to providing a basic identification algorithm;
- an identification server comprising at least one processor and at least one memory, the identification server being operable to:
   receiving one or more original object images or an original object video as reference image data from the administrator device over a communication network,
   splitting, by utilizing instructions stored in the memory and executed by the processor, the original object video into several separate original images,
   applying, by utilizing instructions stored in the memory and executed by the processor, the one or more original object images or the separate original images as input data to the basic identification algorithm;
- the algorithm service being operable to generating, by utilizing instructions of the algorithm service, a reference identification algorithm of the original object from the input data and the basic identification algorithm; and
- identification server being operable to connecting, by utilizing instructions stored in the memory and executed by the processor of the identification server, the reference identification algorithm of the original object to the object profile in the at least one original object database, stored in the one or more storage devices.

According to the above mentioned, the system of the present invention enables the brand owner or the company to set up authenticity identification for own original objects.

In one embodiment, the administrator interface in the administrator device may be operable to taking the one or more original object images or the original object video on a request by the administrator. Alternatively, the administrator device may be operable to taking the one or more original object images or the original object video on a request by the administrator. This allows the administrator or the brand owner to take the one or more original object images or the original object video easily, for example using a digital camera or user device such as mobile phone.

It should be noted, that in the case of taking the one or more original object images instead of the original object video, the splitting step may be omitted.

In one embodiment, administrator interface in the administrator device may be operable to sending the one or more original object images or original object video on a request by the administrator to the identification server over the communication network. Therefore, the administrator may send or upload the one or more original object images or the original object video to the identification server and set up the identification from the administrator device, such as a mobile phone or laptop computer.

In one embodiment, the administrator interface in the administrator device may be operable to creating at least two object sub-profile on a request by an administer for the original object, the at least two sub-profiles representing different sides or different parts of the original object. Accordingly, the administrator may create different sub-profiles for example for different parts or sides of the original object. This means, that the administrator may create a first sub-profile for the front side of the original object and back side of the original object. Alternative, the administrator may create for example a first sub-profile for outer packaging of the original object, a second sub-profile for inner packaging of the original object and a third sub-profile for the original object itself.

An advantage of the invention is that the method and system allows identifying authenticity of an object without adding any excess tags, stickers or visual symbols to the original object. The invention allows brand owners to manage counterfeits without any special knowledge of other technologies for identifying original objects. Furthermore, the method and system enables the brand owner or the company to fully control the counterfeit process by itself such that new products may be provided to the system and removed from the system at any point of time. Furthermore, the method and system allows brand owner to receive valuable information about counterfeit products when users upload images to the identification server for identifying the authenticity. The method and system is further very easy and simple to use and provides information in real time.

### BRIEF DESCRIPTION OF THE DRAWINGS

The invention is described in detail by means of specific embodiments with reference to the enclosed drawings, in which
Figure 1 is a schematic view of one embodiment of a system according to the present invention;
Figure 2 is a schematic view of another embodiment of a system according to the present invention;
Figure 3 is schematic view an administrator device;
Figure 4 is schematic view of a user device;
Figure 5 is schematic view of one embodiment of an identification server of the system according to the present invention;
Figure 6 is a schematic view of another embodiment of the identification server of the system according to the present invention;
Figures 7A and 7B are schematic views of a packaging of a pharmaceutical product;
Figure 8 shows schematically a pharmaceutical product having an outer packaging, inner packaging and a medicine;
Figure 9 is a schematic presentation of a method according to the invention; and
Figure 10 is a schematic presentation of a step of creating a product profile;
Figure 11 is a schematic presentation of a step of receiving an original product video to the identification server;
Figure 12 is a schematic presentation of a step of splitting the original product video into several separate original images;
Figure 13 is a schematic presentation of a step of creating standardized separate original images by image pre-processing;
Figure 14 is a schematic presentation of one embodiment of a step of generating a reference identification algorithm;
Figure 15 is a schematic presentation of another embodiment of a step of generating a reference identification algorithm;
Figure 16 is a schematic presentation of identifying authenticity of a product;
Figure 17 shows a schematic presentation of a step of taking a target image;
Figure 18 shows a schematic presentation of a step of another embodiment of taking a target image;
Figure 19 shows a schematic presentation of a step of receiving a target image;
Figure 20 shows a schematic presentation of a step of processing a target image;
Figure 21 shows a schematic presentation of a step of processing a target image with feature identification algorithms in parallel; and
Figure 22 shows a schematic presentation of a step of processing a target image with feature identification algorithms in series.

### DETAILED DESCRIPTION OF THE INVENTION

In the following the present invention is described in detail referring to the accompanying drawings which also are included to the detailed description. It should be noted that the detailed description together with drawings show example embodiments for carrying out the present invention, but the present invention is not limited to detailed example embodiments. Furthermore, the different embodiment, elements, method steps, structural features described may be combined and changed without departing from the scope of the appended claims. The detailed description provides enough information for skilled person to utilize and practise the present invention.

In the context of this application the same reference numerals in different figures denote the same features. The term "user" refers to a first user of the method and system willing to identify if a pharmaceutical product is authentic or not. Therefore, the user means for example a buyer or consumer of the product in the context of the present application. The term "administrator" refers to a second user of the system and method willing to set up system or method for identifying authenticity of the product. Therefore, the administrator means for example brand owner or company producing the product or product. The term "product" refers to any physical pharmaceutical products, packaging of pharmaceutical products, medicines, such as pills, or combinations or parts thereof.

In the following detailed description and examples, the original object and object to be identified is a pharmaceutical product. Therefore, the object in the context of this application may be any physical object, such as pharmaceutical product, outer packaging, inner packaging, a pill or the like. Furthermore, the object may also be a bag, electronic device, art, painting, or any other physical product.

Further, the basic identification algorithm may be a machine learning algorithm such as an artificial neural network, or convolutional neural network. Neural networks are preferable, as they are able to process mixed data Flexible, use of mixed or heterogeneous data, such text, numeric and image data. Further they may be trained fast and efficiently. The reference identification algorithm may therefore be trained machine learning algorithm, such as trained artificial neural network.

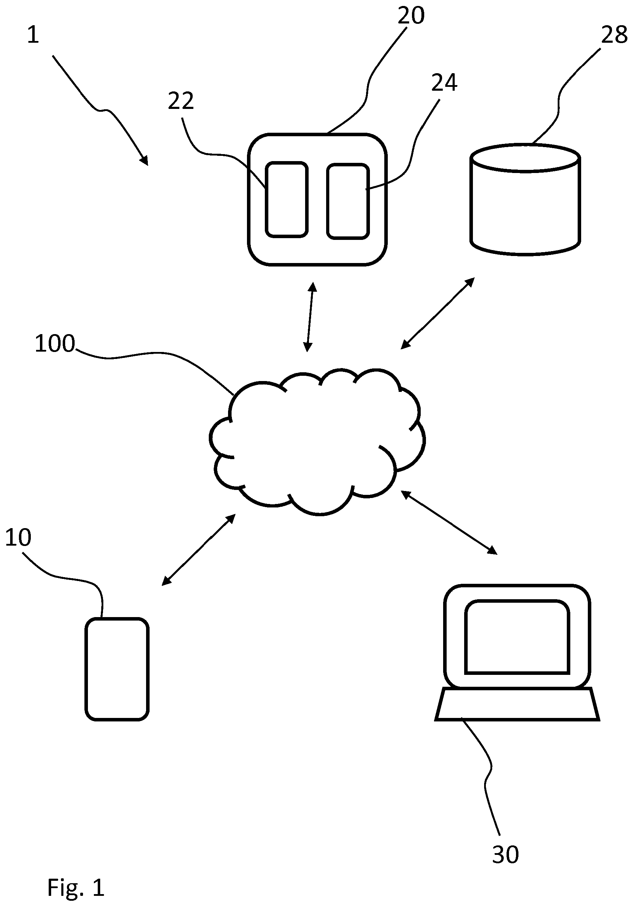

Figure 1 shows a system 1 of the present invention in a high-level illustration, the system being suitable for identifying authenticity of pharmaceutical product. The system 1 comprises an identification server 20 and user devices 10 and administrator devices 30 interact with the identification server 20 through over a communication network 100. The system 1 further comprises at least one storage device 28, for example storing at least one database, connected to the communication network 100. The user devices 10, administrator devices 30, the storage devices 28 and the identification server 20 are communicatively coupled via the communication network 100 and network connections.

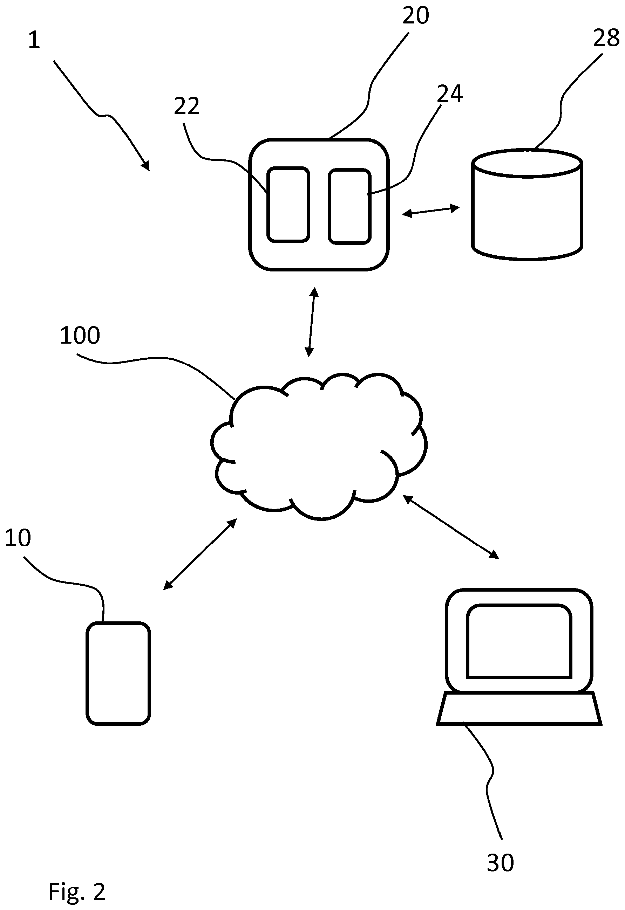

Figure 2 shows an alternative embodiment of the system 1 of the present invention in a high-level illustration. In this embodiment, the at least one storage device 28 is provided in connection with the identification server 20. Thus, the storage device 28 may be directly connected to the identification server 20 or the storage device may be part of the identification server 20.

In an alternative embodiment, at least one storage device 28, may be connected to the communication network 100, as in figure 1, and at least one storage device 28 may be connected directly to the identification server 20 or be part of the identification server 20, as in figure 2. The present invention is not limited to any particular structure of the storage devices 28.

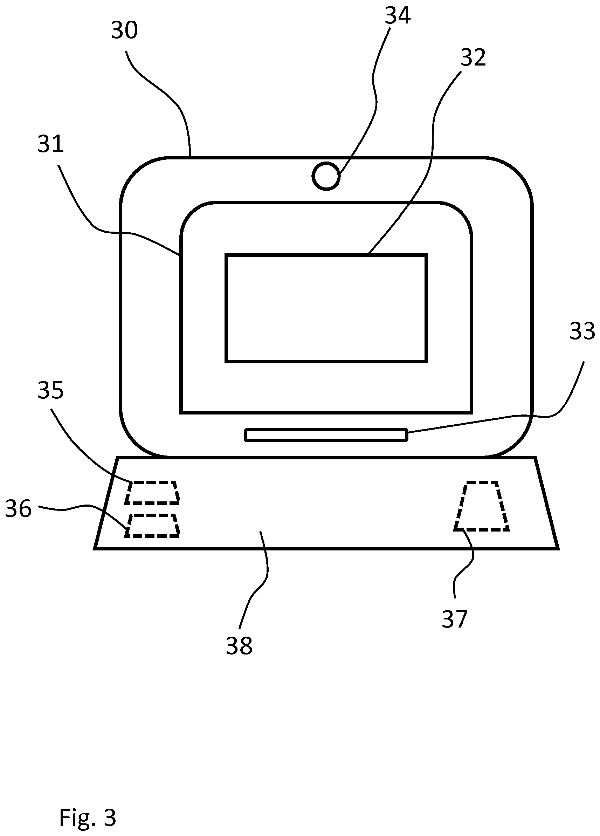

Figure 3 shows a schematically a diagram or drawing of an administrator device 30. The administrator device 30 may comprise a display 31 and an administrator interface 32 via which the administrator may interact with the identification server 20 over the communication network 100. The administrator device 30 may also comprise one or more administrator device memories 35, one or more administrator device processors 36 and one or more administrator device storages 37. The administrator device storages 37 may be integral components of the administrator device 30 or external storages connected or connectable to the administrator device 30.

In one embodiment, the administrator device 30 may also comprise a camera or imaging device 34 for taking a video or image. Furthermore, in some embodiments the administrator device 30 may also comprise a speaker and/or microphone 33. It should be noted, that in some embodiments the imaging device 34 may be integral to the administrator device 30, but in some other embodiments the imaging device may be a separate device, such as a separate digital camera.

The administrator device 30 may be same or different kind of device as the user device 10. In one embodiment, the administrator device 30 may be mobile communication device, such as mobile phone or a tablet computer suitable for performing web browsing or capable of accessing and interacting with the identification server 20. However, the user device may also be personal digital assistant, laptop computer, desktop computer, thin client, electronic notebook or any other such device having a display 31 and administrator interface 32 and being suitable for performing web browsing or capable of accessing and interacting with the identification server 20. In a preferred embodiment, the user device is a mobile device, meaning mobile phone, tablet computer or laptop computer.

The administrator interface 32 associated with the administrator device 30 may comprise any suitable interface 32 for a human user. In one embodiment, the administrator interface 32 may be graphical interface displayed on the display 31 of the administrator device 30. The administrator interface 32 may be accessible by the administrator with an input device 38 such as touchscreen, keyboard, mouse, touchpad, keypad, trackball or any other suitable hand operated input device or some other kind of input device such as voice operable user device or human gesture, such as hand or eye, gesture detecting input device. The input device 38 may be configured to receive input from the administrator. The administrator interface 32 (generally API, Application Programmable Interface) may be provided in conjunction with the system and method of the present invention in order to enable the administrator to interact with the identification server 20. It should be noted that the system and method may comprise more than one different kinds of administrator interfaces 32. Furthermore, the administrator device 30 may comprise an administrator application, such as a software application, stored in the administrator device memory 35, or administrator device storages 37, and executed with the administrator device processors 36.

The display 31 of the administrator device 30 may be any known display component, such as touch screen, computer display, projector or special display device allowing the administrator to display and operate the administrator interface 32. The display 31 may further comprise video graphics adapter card, liquid crystal display (LCD) component, light emitting diode (LED) element, or any other device or element capable of presenting the administrator interface 32.

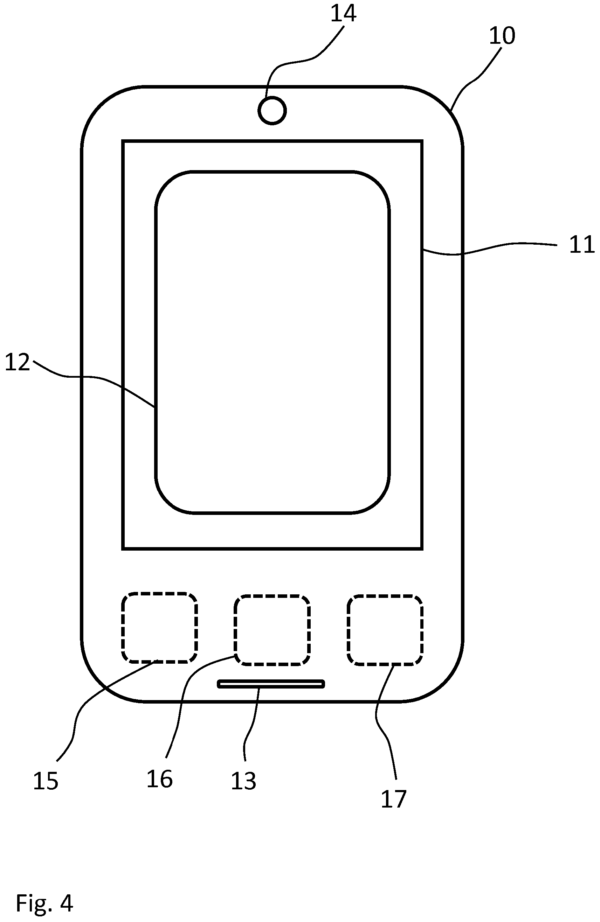

Figure 4 shows a schematically a diagram or drawing of a user device 10. The user device 10 may comprise a display 11 and a user interface 12 via which the user may interact with the identification server 20 over the communication network 100. The user device 10 may also comprise one or more user device memories 15, one or more user device processors 16 and one or more user device storages 17. The user device storages 17 may be integral components of the user device 10 or external storages connected or connectable to the user device 10.

In one embodiment, the user device 10 may also comprise a camera or imaging device 14 for taking a video or image. Furthermore, in some embodiments the user device 10 may also comprise a speaker and/or microphone 13.

The user device 10 may be similar to the administrator device 30, or it may be different, for example one of the devices mentioned in connection with the administrator device 30. In a preferred embodiment, the user device may be mobile phone. The user device 10 may be any device having a display 11 and user interface 12 and being suitable for performing web browsing or capable of accessing and interacting with the identification server 20. Furthermore, it should be noted that different user and administrator devices 10, 30 may be used for utilizing the method and system, of the present invention.

The user interface 12 associated with the user device 10 may comprise any suitable interface 12 for a human user. In one embodiment, the user interface 12 may be graphical user interface displayed on the display 11 of the user device 10. The user interface 12 may be accessible by the user with an input device 38 such as touchscreen 11 or any other input device as mentioned in connection with the administrator device 30. The input device 11 may be configured to receive input from the user. The user interface 12 (generally API, Application Programmable Interface) may be provided in conjunction with the system and method of the present invention in order to enable the user to interact with the identification server 20. It should be noted that the system and method may comprise more than one different kinds of user interfaces 12. Furthermore, the user device 10 may comprise a user application, such as a software application, stored in the user device memory 15, or user device storages 17, and executed with the user device processors 16.

The display 11 of the user device 10 may be any known display component, including the ones mentioned in connection with the administrator device 30, allowing the user to display and operate the user interface 12. The display 11 may further comprise video graphics adapter card, liquid crystal display (LCD) component, light emitting diode (LED) element, or any other device or element capable of presenting the user interface 12.

Figures 1 and 2 show a schematically the identification server 20. The identification server 20 may be used for operating a website or web service for providing and carrying the method according to the present invention. The identification server 20 may comprise, be, or be an integral part of at least a variety of types of devices and systems such as a general-purpose computer, desktop computer, server, web server, cloud server Apache HTTP server, computer network, network service, cloud computing service, web service, web hosting service, and so forth. In some embodiments, the identification server has cloud-based implementation meaning it integrates multiple web servers and their services. The identification server 20 comprises at least one processor or central processing unit (CPU) 22 and at least one memory 24. The memory 24 may store different kind of data or data elements such as instructions operating the processor 22 of the identification server 20 when the system 1 and the method according to the present invention is utilized. The identification server 20 is operable to receive and to communicate information to and from user devices 10 and the administrator devices 30 over the communication network 100.

In one embodiment, the identification server 20 comprises one server and in an alternative embodiment the may comprise more than one server or other equipment, each performing different or same functions in order to receive and communicate information to the user devices 10 and administrator devices 30. The identification server 20 may comprise software and/or algorithms to achieve the operations for processing, communicating, delivering, gathering, uploading, maintaining and/or generally managing data. The software and/or algorithms may be stored on the memory 24 of the identification server 20. Alternatively, the mentioned operations and techniques may be achieved by any suitable hardware, component, device, application specific integrated circuit (ASIC), additional software, field programmable gate array (FPGA), server, processor, algorithm, erasable programmable ROM (EPROM), electrically erasable programmable ROM (EEPROM), or any other suitable product that is operable to facilitate such operations.

The memory 24 of the identification server 20 may be a non-transitory computer-readable storage medium or a computer-readable storage device. In some embodiments the memory 24 may be a temporary memory, meaning that a primary purpose of memory 24 may not be long-term storage. Memory 24 may also refer to a volatile memory, meaning that memory 24 does not maintain stored contents when memory 24 is not receiving power. Examples of volatile memories include random access memories (RAM), dynamic random access memories (DRAM), static random access memories (SRAM), and other forms of volatile memories known in the art. In some examples, memory 24 is used to store program instructions for execution by the processors 22. Memory 24, in one embodiment, is used by software (e.g., an operating system) or applications, such as a software, firmware, or middleware. The memory 24 may comprise for example operating system or software application comprising at least part of the instructions for executing the method.

The above mentioned description of memory 24 may also concern memory 35 of the administrator device 30 and/or the memory 15 of the user device 10.

The identification server 20 may further comprise one or more storage devices 28, 29, as shown in figures 1, 2, 5 and 6. The storage devices 28, 29 may also include one or more transitory or non-transitory computer-readable storage media and/or computer-readable storage devices. In some embodiments, storage devices 28, 29 may be configured to store greater amounts of information than memory 24. Storage devices 28, 29 may further be configured for long-term storage of information. In some examples, the storage devices 28, 29 comprise non-volatile storage elements. Examples of such non-volatile storage elements include magnetic hard discs, optical discs, solid-state discs, flash memories, forms of electrically programmable memories (EPROMs) or electrically erasable and programmable memories (EEPROMs), and other forms of non-volatile memories known in the art. For example, storage devices 28, 29 may store one or more databases for maintaining original product information, product profiles or target image data. In one embodiment the storage device 28, 29 may comprise databases and the memory 24 comprises instructions and operating algorithms for executing the method according to the present invention utilizing the one or more processors 22. However, it should be noted that the storage devices 28, 29 may also be omitted and the identification server 20 may comprise only the memory 24. Alternatively, the memory 24 could be omitted and the identification server 20 could comprise only one or more storage devices 28, 29. Therefore, the terms memory 24 and storage device 28, 29 could be interchangeable in embodiments which they both are not present. The storage devices 28, 29 are operable with other components and data of the system 1 by utilizing instructions stored in the memory 24 and executed by the processor 22 over the communication network 100.

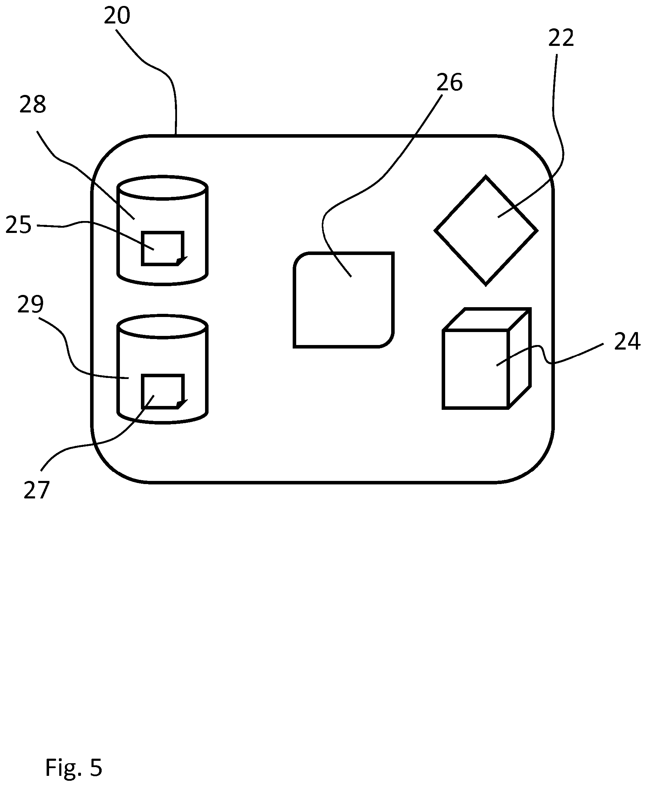

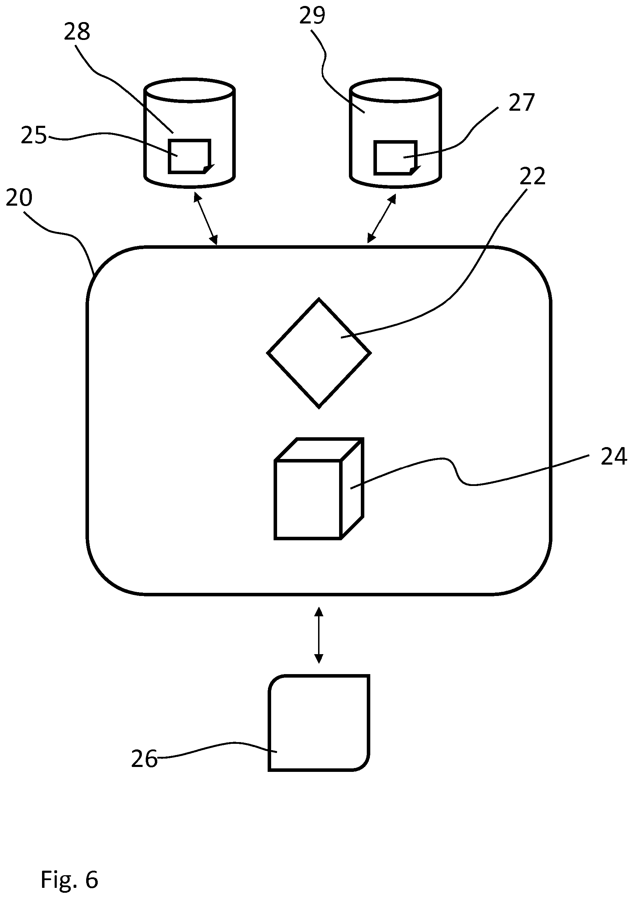

The storage devices 28, 29 may be provided in connection with the identification server 20 or the identification server 20 may comprise the storage devices 28, 29, as shown in figures 1 and 5. Alternatively, the storage devices 28, 29 may be provided as external storage devices 28, 29, external to the identification server 20, and the storage devices 28, 29 are connected to the identification server 20 directly or via the communication network 100, as shown in figures 2 and 6.

The communication network 100 may comprise one or more communication networks which may comprise, but is not limited to: the Internet, intranet, local area network (LAN), wide area network (WAN), metropolitan area network (MAN), cellular phone network (e.g. Global System for Mobile (GSM) communications network, packet switching communication network, circuit switching communication network), virtual private network, Bluetooth radio, an IEEE 802.11 -based radio frequency network (e.g. Wi-Fi ^{®}), or any other appropriate architecture or system that facilitates communications in a network or a combination of any networks or systems described.

The identification server 20 may further be provided with at least one network interface (not shown), such as application program interface (API). The network interface may be utilized to communicate with external devices and servers via one or more communication networks 100, such as one or more wired, wireless, or optical networks comprising, for example, the Internet, intranet, LAN, WAN, cellular phone networks, Bluetooth radio, an IEEE 802.11-based radio frequency network, and so forth. The network interface may be a network interface card, such as an Ethernet card, an optical transceiver, a radio frequency transceiver, or any other type of device that can send and receive information. Other examples of such network interfaces may comprise Bluetooth^{®}, 3G, 4G, and WiFi^{®} radios in mobile computing devices as well as USB. The identification server 20 may further also comprise power supply, housing, communication bus and other physical components.

The operating system may interact with the above described components of the identification server 20 and devices connected to the identification server 20 directly or via application(s) or instructions stored in the memory 24.

The identification server 20 may further comprise one or more additional services 26 providing additional information and data to the method according to the present invention, as shown in figures 5 and 6. The additional service 26 may comprise additional software and/or one or more databases and/or websites and/or web or cloud services stored on one or more storage devices and operable with the method of the present invention. In one embodiment, the additional service 26 is an algorithm service 26. However, the additional service 26 may also be some other service. The additional service 26 is operable with other components and data of the system by utilizing instructions stored in the memory 24 and executed by the processor 22 over the communication network 100.

As shown in figure 5, the additional service 26 may be an internal service of the identification server 20 or an additional service 26 provided in connection with the identification server 20. Alternatively, the additional service 26 may be an external service connected to the identification server 20 directly or over the communication network 100, as shown in figure 6.

In one embodiment, the additional service 26 is an algorithm service operable to providing basic identification algorithm for the identification method of the present invention. The algorithm service may comprise artificial neural network, such as a convolutional neural network or capsule network, operable to providing the basic identification algorithm and generating a reference identification algorithm from input image data. In one specific example the algorithm service comprises publicly available machine learning library or the like.

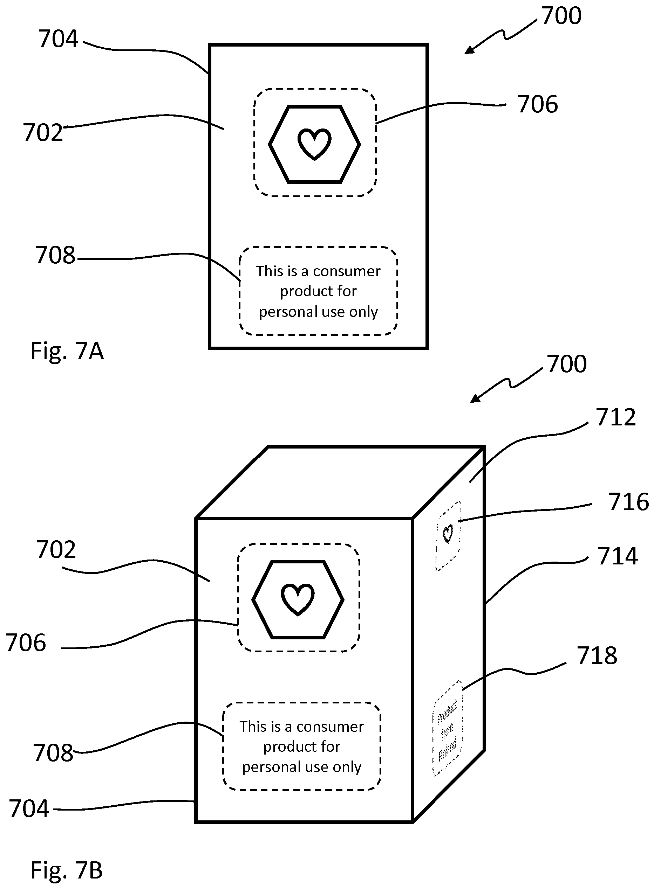

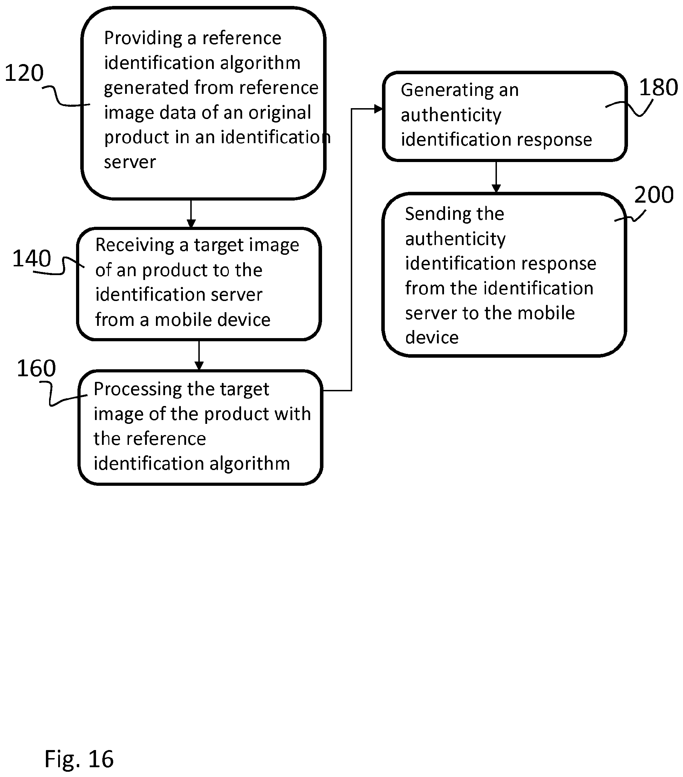

Figure 7A shows one original pharmaceutical product 700, which is a pharmaceutical product package. The original pharmaceutical product 700 may have two or more different features which may be identified separately or together. In figure 16A, the original product has at least the following features when a first side or surface 702 of the original pharmaceutical product is viewed: shape, or dimensions, or contour 704 of the original pharmaceutical product, visual symbols 706 and written text feature 708. Anyone or all of these features may be separately or in combination identified.

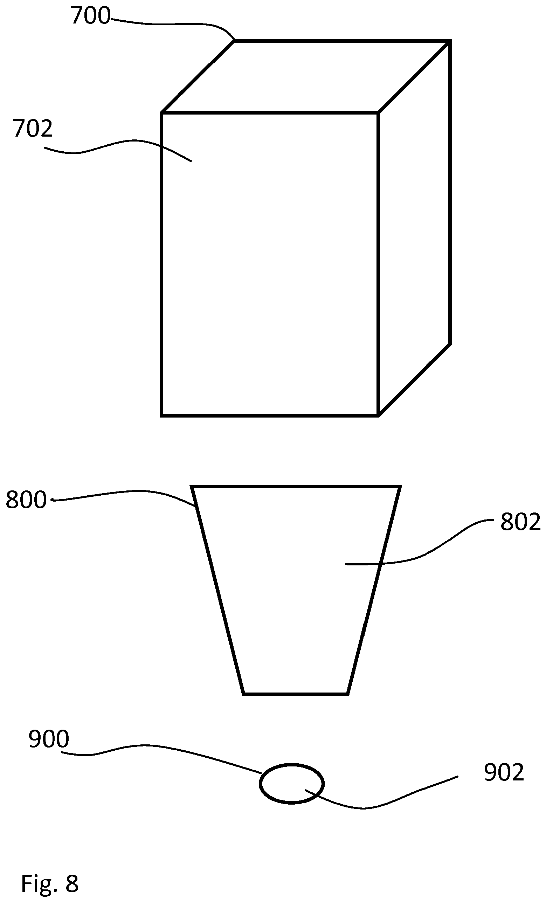

As shown in figures 7B and 8 the original pharmaceutical product may have more than one identifiable parts or sides or surfaces. In figure 7B, the pharmaceutical product 700 has a second side or surface 712 comprising a second shape or contour 714 of the original product, second visual symbols 716 and second written text feature 718. Anyone or all of these features may be separately or in combination identified, and separately or in combination with the first surface 702. In figure 8, the original pharmaceutical product 700 comprises the first part 700 and further second and third parts 800, 900 having sides or surfaces 802, 902 respectively. Each surface or side 702, 712, 802, and 902 of the pharmaceutical product may have a specific combination of features. Therefore, each of these surfaces 702, 712, 802, and 902 or parts 700, 800, 900 may be or should be separately or in combination identified. Thus, each of the different sides 702, 712, 802, 902 and parts 700, 800, 900 should have a product sub-profile and/or different identification algorithms. As shown in figure 8, the pharmaceutical product may comprise an outer packaging 700, inner packaging 80 and the medicine 900. The identification may be carried out for one or more of these parts 700, 800, 900 for identifying the authenticity. Therefore, the identifying may be based on one or more of the these parts. Thus, the identifying may be carried out parallel to one or more of the these parts. The identification may also be carried out in series such that the different parts are identified successively. The administrator may create for example a first sub-profile for outer packaging of the original product, a second sub-profile for inner packaging of the original product and a third sub-profile for the original product itself. The inner packaging maybe for example blister pack for medicine pills or the like, and the medicine product may be a medicine pill.

In some embodiments, the administrator interface 32 may instruct in taking the original product video. Accordingly, the administrator device 30 or the administrator interface 32 may instruct, by utilizing instructions stored in the administrator device memory 35 and executed by the administrator device processor 36, in taking the original product video. The administrator interface 32 in the administrator device 30 of the system 1 may be operable to instruct the administrator in taking the original product video.

In one embodiment, the administrator device 30 or the administrator interface 32 may instruct, by utilizing instructions stored in the administrator device memory 35 and executed by the administrator device processor 36, in taking the original product video on a predetermined angle or in predetermined angles. The administrator device 30 may comprise one or more accelerometers for determining the position or angle of the administrator device 30 or the camera 34. Accordingly, the accelerometer may be operable to determining or calculating position or posture of the administrator device 30, for example by utilizing instructions stored in the administrator device memory 35 and executed by the administrator device processor 36 of the administrator device 30. Accordingly, the administrator device 30 or the administrator interface 32 may instruct, by utilizing instructions stored in the administrator device memory 35 and executed by the administrator device processor 36, in taking the original product video on a predetermined angle or in predetermined angles based on the calculation or determination of the position or posture of the administrator device 30 with the one or more accelerometers.

In one embodiment, the administrator device 30 or the administrator interface 32 may instruct, by utilizing instructions stored in the administrator device memory 35 and executed by the administrator device processor 36, placing the original product on a horizontal plane or surface before taking the original product video. Then, the administrator device 30 or the administrator interface 32 may instruct taking the original product video in predetermined angle or angles.

According to the above mentioned, the original product video may be instructed to be taken in one angle or turning the camera or the administrator device 30 in different angles during taking the original product video.

In one embodiment, the administrator interface 32 in the administrator device 30 is operable in calculating, by utilizing instructions stored in the administrator device memory 35 and executed by the administrator device processor 36 and the accelerometer, the position or posture of the administrator device 30 or the camera during taking the original product video. The calculated position or posture of the administrator device 30 or the camera during taking the original product video may be send to the identification server 20 together with the original product video, or separately. The calculated position or posture of the administrator device 30 or the camera may further be stored to the product profile or provided as input data to the basic identification algorithm. In this embodiment, the administrator device 30 or the administrator interface 32 may instruct, by utilizing instructions stored in the administrator device memory 35 and executed by the administrator device processor 36, placing the original product on a horizontal plane or surface before taking the original product video. Then, the position or posture of the administrator device 30 or the camera is calculated during taking the original product video.

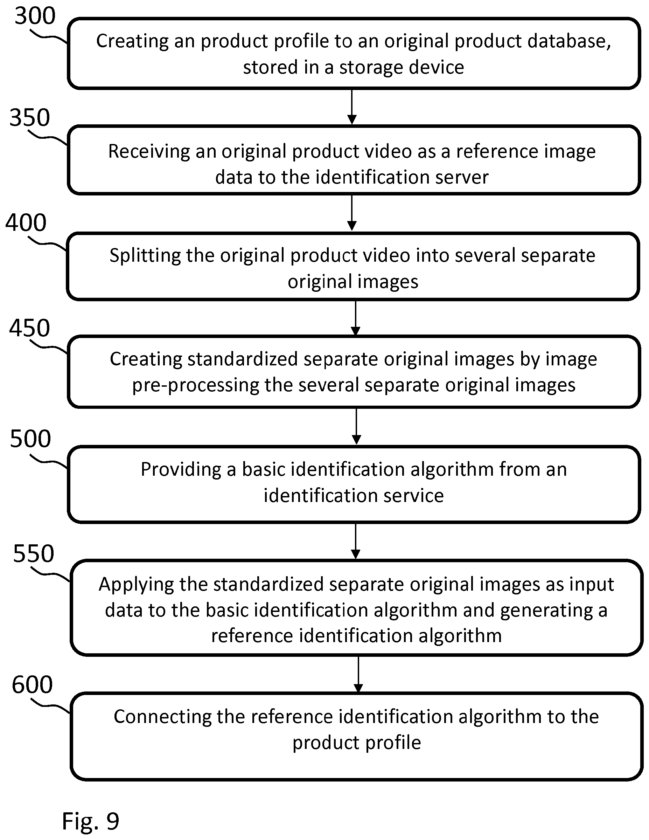

Figures 9 - 22 illustrate flow diagrams in accordance with one or more aspects of the present invention. The flow diagrams are depicted and described as a series of acts. The subject of the invention is not limited by the acts illustrated and/or by the order of the acts. Acts can occur in various orders and/or concurrently, and with other acts not presented herein. Not all illustrated acts may be required to implement the flow diagrams in accordance with the claimed subject matter.

Figure 9 shows one embodiment of the method according to the present invention. The method comprises step 300 of creating, with the administrator interface 32 of the administrator device 30, a new product profile on a request by the administer for new original pharmaceutical product. The product profile may comprise original product data of the original product and the videos or images of the new original product.

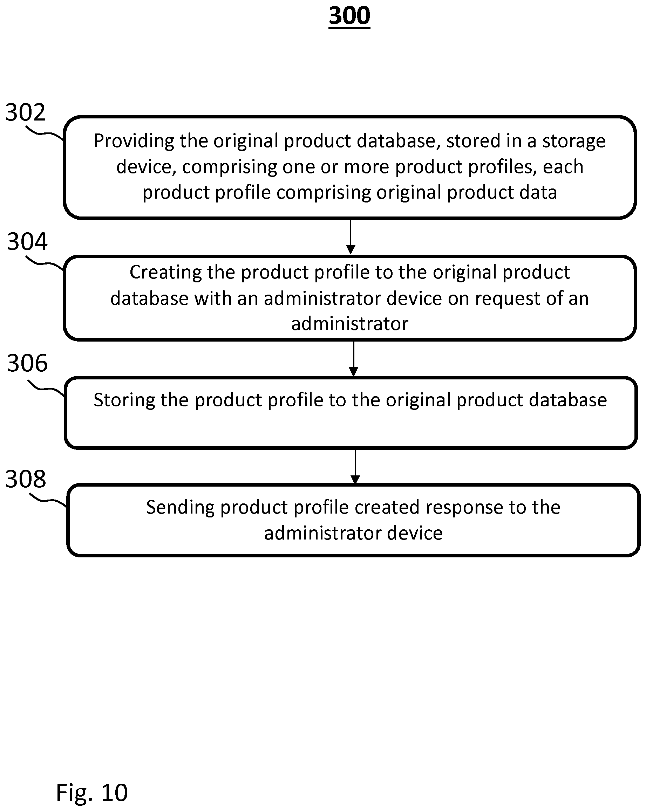

Figure 10 shows the step 300 in greater detail. Creating the new product profile comprises step 302 of providing at least one original product database 25, stored in the one or more storage devices 28, for one or more product profiles, each product profile comprising original product data of one original product. The product profile may also comprise the original product video, separate original product images and/or standardized separate original images stored in the one or more storage devices 28. In step 304, the new product profile is created for the new original product. Then the created new product profile is stored to the at least original product database 25 in one or more storage devices 28, on request of the administrator with the administrator interface 32. Then the method may further comprise step 308 of sending "product profile created" response to the administrator device 30. The step 308 may be carried out automatically, by utilizing instructions stored in the memory 24 and executed by the processor of the identification server 20 over the communication network 100. Step 308 may also comprise generating, by utilizing instructions stored in a memory 24 and executed by a processor 22 of the identification server 20, "the product profile generated" response, and sending, by utilizing instructions stored in a memory 24 and executed by a processor 22 of the identification server 20, the product profile generated response to the administrator device 30 over the communication network 100.

The method of the present invention further comprises step 350 of receiving an original product video as reference image data of the original product to the identification server 20 over the communication network 100.

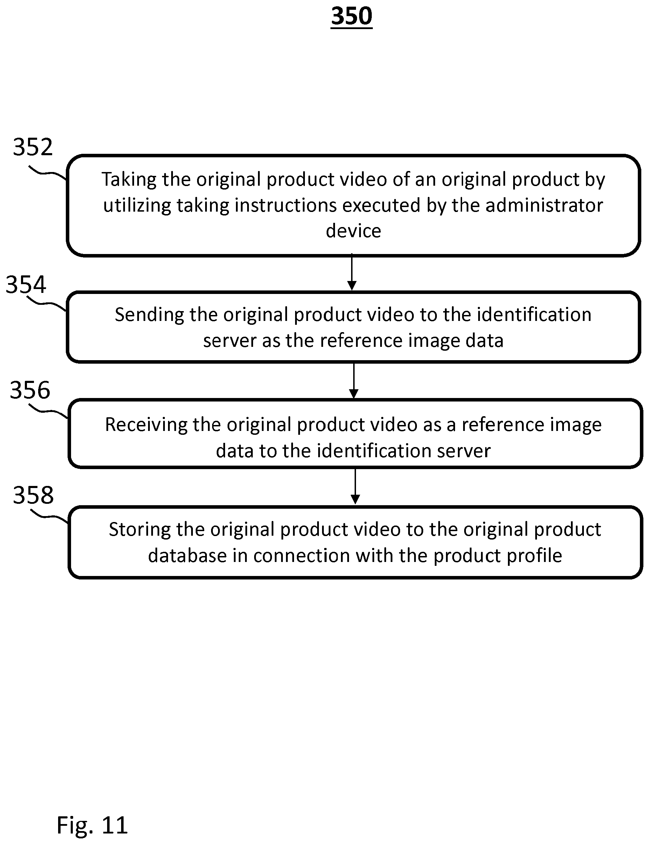

One embodiment of step 350 is shown in figure 11. In this embodiment, the step 350 of receiving the original product video comprises step 352 of taking the original product video of the new original product by utilizing image taking instructions stored in the administrator device memory 35 and executed by the administrator device processor 36 and using the administrator interface 32 in the administrator device 30.

In an alternative embodiment, the step 352 may be replaced by uploading the original product video from an external source (not shown) to the administrator device, or taking the original product video with a separate imaging device (not shown) and uploading the original product video from an external source (not shown) to the administrator device, and/or uploading the original product video from the one or more administrator device storages 37 to the administrator interface 32 in the administrator device 30.

The step 350 may further comprise step 354 of sending or uploading the original product video to the identification server 20 via the communication network 100, on request of the administrator in the administrator interface 32. The sending may also be carried out automatically, by utilizing image taking instructions stored in the administrator device memory 35 and executed by the administrator device processor 36, upon taking the original product video with the administrator interface 32. Then, in step 356 the original product video is received to the identification server 20 as reference image data of the original product over the communication network 100. The original product video may be, automatically or on request of the administrator, stored in step 358 to the original product database 25 in the one or more storage devices 28 in connection with the product profile of the new original product or separate from the product profile. Alternatively, the original product video may be stored in another storage device or the step 358 may be omitted.

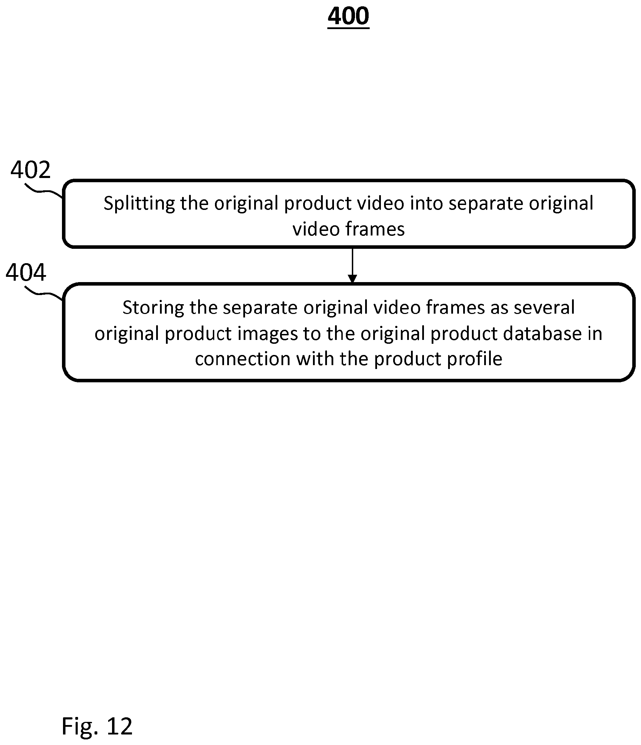

The method of the present invention further comprises step 400 of automatically splitting, by utilizing instructions stored in a memory 24 and executed by a processor 22 of the identification server 20, the original product video into several separate original images. In one embodiment of the invention, the automatically splitting the original product video comprises step 402 of automatically splitting, by utilizing instructions stored in a memory 24 and executed by a processor 22 of the identification server 20, the original product video into video frames to create the several separate original images. In step 404 of figure 12, the separate original product images or the separate original video frames, automatically by utilizing instructions stored in a memory 24 and executed by a processor 22 of the identification server 20 or on request of the administrator, may be stored to the original product database 25 in the one or more storage devices 28 in connection with the product profile of the new original product or separate from the product profile. Alternatively, the separate original product images or the separate original video frames may be stored in another storage device or the step 404 may be omitted.

The method of the present invention comprises step 450 of automatically, or on request of the administrator, creating, by utilizing instructions stored in the memory 24 and executed by the processor 22 of the identification server 20, standardized separate original images by image pre-processing the several original images. The image pre-processing may further comprise step 452 in which the creating of standardized separate original images by image pre-processing the several original images may comprise cropping, scaling, flipping, rotating, filtering, utilising affine transformation or any other image processing method, by utilizing instructions stored in the memory 24 and executed by the processor 22 of the identification server 20, the several original images or several original video frames. The pre-processing may further comprise automatically selecting, by utilizing instructions stored in a memory 24 and executed by a processor 22 of the identification server 20, a number of the several separate original images to be image pre-processed into standardized separate original images. Thus, only part of the several separate original images may be pre-processed and sued and input data to the basic identification algorithm. This allows, utilizing only images fulfilling certain predetermined criteria.

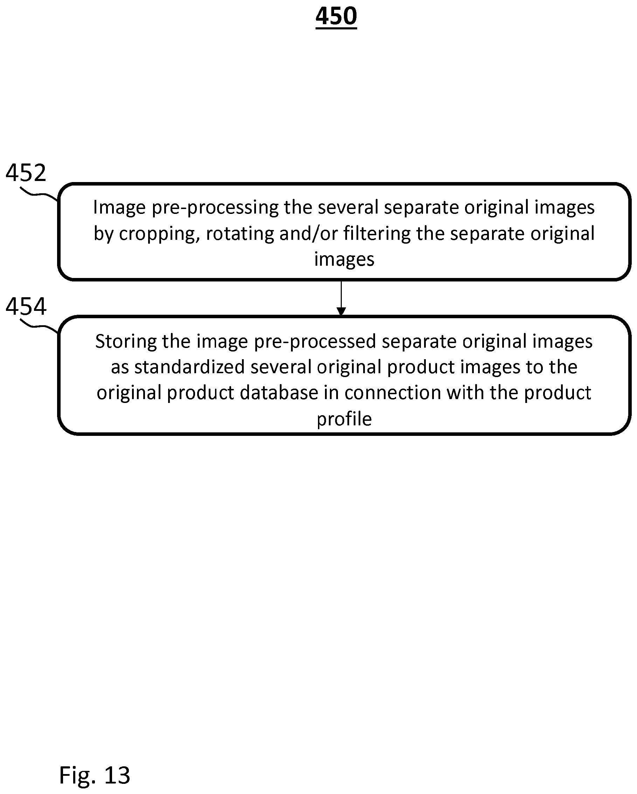

In step 454 of figure 13, the standardized separate original product images may be stored, automatically by utilizing instructions stored in a memory 24 and executed by a processor 22 of the identification server 20 or on request of the administrator, to the original product database 25 in the one or more storage devices 28 in connection with the product profile of the new original product or separate from the product profile. Alternatively, the separate original product images or the separate original video frames may be stored in another storage device or the step 404 may be omitted.

The method further comprises step 500 of providing a basic identification algorithm from an algorithm service 26. The basic identification algorithm may be provided to the identification server 20 from the algorithm service 26 or it may be formed in the algorithm service 26. The algorithm service 26 may comprise an artificial neural network or convolutional neural network.

The method also comprises step 550 of applying, by utilizing instructions stored in the memory 24 and executed by the processor 22 of the identification server 20, the standardized separate original images as input data to the basic identification algorithm provided from the algorithm service 26. This step 550 may be carried out by uploading or sending the standardized separate original images to the algorithm service 26 by utilizing instructions stored in the memory 24 and executed by the processor 22 of the identification server 20 and processing the standardized separate original images with the basic identification algorithm in the algorithm service 26. Alternatively, the step 550 may be carried out by identification server by utilizing instructions stored in the memory 24 and executed by the processor 22 of the identification server 20 and processing the standardized separate original images with the basic identification algorithm provided to the identification server 20 from the algorithm service 26. Accordingly, the basic identification algorithm is trained with the standardized separate original images to identify original products. Then, the reference identification algorithm is generated, by utilizing instructions of the algorithm service 26, from the input data, meaning the standardized separate original images, as the standardized separate original images are processed with the basic identification algorithm. The reference identification algorithm is specific to the new original product and created product profile.

When the reference identification algorithm is generated, then in step 600, the reference identification algorithm of the original product is connected, by utilizing instructions stored in the memory 24 and executed by the processor 22 of the identification server 20, to the product profile in the at least one original product database 25, stored in the one or more storage devices 28. Connecting the reference identification algorithm to the product profile may be carried out by storing the reference identification algorithm to the one or more storage devices 28 or to the algorithm service and connecting it to the product profile or by storing the reference algorithm to the product profile in the original product database 25. In this way, the original product data and the reference identification algorithm of the same original product are connected to each other for identification of products.

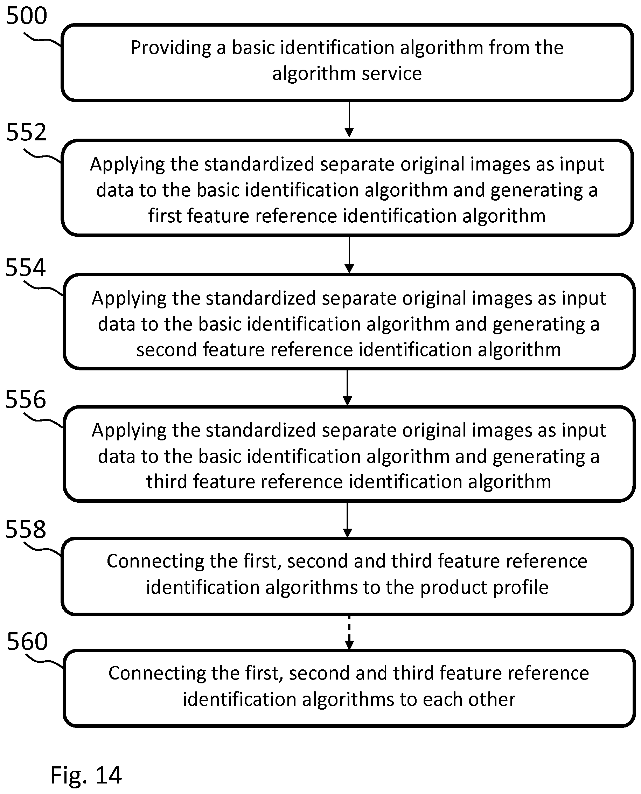

Accordingly, the steps 500 of providing the basic identification algorithm from the algorithm service 26 may comprise providing two or more basic feature identification algorithms or a basic identification algorithm comprising two or more feature sub-algorithms. As shown in figure 14, the step of 550 applying the standardized original images as input data to the basic identification algorithm may comprise: generating, by utilizing instructions of the algorithm service 26, two or more feature reference identification algorithms for identifying separate features of the original product 700, or alternatively generating, by utilizing instructions of the algorithm service 26, two or more separate feature reference identification algorithms for identifying separate features of the original product 700. Alternatively, it may comprise generating, by utilizing instructions of the algorithm service 26, the reference identification algorithm comprising two or more feature reference identification algorithms for identifying separate features of the original product.

As shown in figure 14, the method may comprise step 552 of applying the standardized original images as input data to the basic identification algorithm, or first feature basic identification algorithm, and generating a first feature reference identification algorithm or sub-algorithm. Then, in step 554 the standardized original images may be applied as input data to the basic identification algorithm, or second feature basic identification algorithm, and generating a second feature reference identification algorithm or sub-algorithm. Further, in step 556 the standardized original images may be applied as input data to the basic identification algorithm, or third feature basic identification algorithm, and generating a third feature reference identification algorithm or sub-algorithm.

Then the first, second and third feature identification algorithms may be or the combined reference identification algorithm may be connected to the product profile in the original product database 25 in the one or more storage devices 28. Furthermore, in a case of separate feature identification algorithms, the first, second and third feature identification algorithms may be combined to each other in step 560.

In one embodiment, the generating, by utilizing instructions of the algorithm service 26, the reference identification algorithm or the two or more feature reference identification algorithms comprises automatically generating, by utilizing instructions of the algorithm service 26, a shape reference identification algorithm for identifying shape 704 of the product 700. Additionally or alternatively, it may comprise automatically generating, by utilizing instructions of the algorithm service 26, a visual symbol reference identification algorithm for identifying visual symbols 706 on the product 700, and/or automatically generating, by utilizing instructions of the algorithm service 26, an optical character recognition reference identification algorithm for identifying written text 708 on the product 700.

The above described feature reference identification algorithms may divide identification process to successive steps or to parallel parts.

As mentioned above and shown in figures 7B and 8, the original pharmaceutical product may comprise first, second and third parts, or at least two parts, 800, 900 having sides or surfaces 802, 902 respectively. Each surface or side 702, 712, 802, and 902 of the product may have a specific combination of features. Therefore, each of these surfaces 702, 712, 802, and 902 or parts 700, 800, 900 may be or should be separately or in combination identified. Thus, each of the different sides 702, 712, 802, 902 and parts 700, 800, 900 can have a product sub-profile and/or different identification algorithms. There, may be two or more sub-profiles.

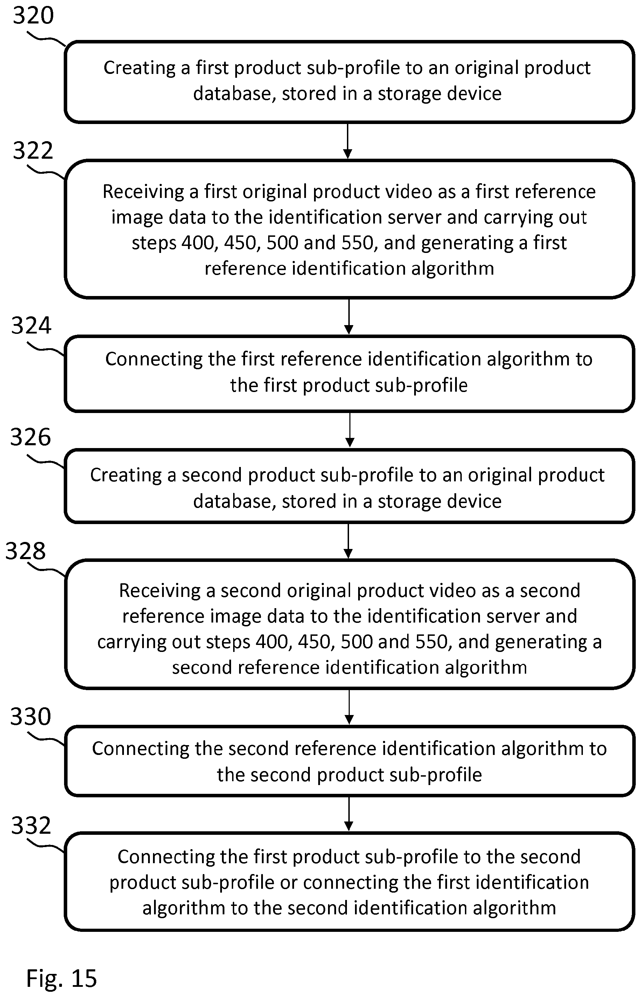

As shown in figure 15, the method may further comprise step 320 of creating a first product sub-profile to the original product database and receiving a first original product video as first reference image data to the identification server in step 322 and carrying out steps 400, 450, 500, 550 and generating a first reference identification algorithm. The first reference identification algorithm may be then connected to the first product sub-profile in the original product database in step 324. Then, the method may further comprise step 326 of creating a second product sub-profile to the original product database and receiving a second original product video as first reference image data to the identification server in step 328 and carrying out steps 400, 450, 500, 550 and generating a second reference identification algorithm. The second reference identification algorithm may be then connected to the second product sub-profile in the original product database in step 330. This may be done for two or more separate sides or surfaces or parts of the original product. Then, in step 332 the first and second product sub-profiles or the first and second reference identification algorithms may be connected to each other or to the product profile under which the product sub-profiles are created. It should be noted that the step 332 may also be omitted.

The sub-profiles or different reference identification algorithms of the sub-profiles may be connected to each other in the original product database 28, or the sub-profiles or different reference identification algorithms of the sub-profiles may be connected to the upper level product profile of the pharmaceutical product in the original product database 28. Alternatively, the sub-algorithms may be connect to each other or to the sub-profiles or the upper level product profile of the pharmaceutical product.

According to the above mentioned, the identification of authenticity of the pharmaceutical product may be carried out according to target image of any of the sides, surfaces or parts of the product having a sub-profile and reference identification sub-algorithm. Alternatively, the identification of authenticity of the pharmaceutical product may be carried out based on two or more target image of the sides, surfaces or parts of the product having a sub-profile and reference identification sub-algorithm. This may be carried out series or in parallel in the same manner described in connection with the feature reference identification algorithms. For example, the identification may be based on only outer packaging, inner packaging or the product itself. Alternatively, the identification may be based two or more of the outer packaging, inner packaging and the product itself.

According to the above mentioned, the sub-profiles or different reference identification algorithms of the original product may be used in combination of the feature reference identification algorithms, respectively. Thus, a very complex and detailed identification may be provided with the system and method of the present invention.

Figure 16 shows a schematic presentation of the method according to the invention which can be performed by a user device to identify authenticity of a product and facilitate recognizing counterfeit products by a user of the user device who is a normal customer. In 120 a reference identification algorithm is provided in an identification server, which the reference algorithm is generated from reference image data of an original product. The reference image data of the original product comprises multiple images from the original product. The reference identification algorithm is provided in the identification server for example and preferably by a third party and not by the user of the mobile device.. In step 140 a target image of a product is received in the identification server from a user device. In other words, the target image of the product is sent from the user device to the identification server and in 160 the target image of the product is processed with the reference identification algorithm. In 180 an authenticity identification response is generated and in 200 the authenticity identification response is sent from the identification server to the user device. Process steps 120, 140, 160, 180 and 200 illustrated in figure 16 are performed in the identification server automatically without participation of the user of the user device other than in sending the target image so that the identification server can receive it in step 140 and receiving the authenticity identification response which is sent from the identification server in step 200.

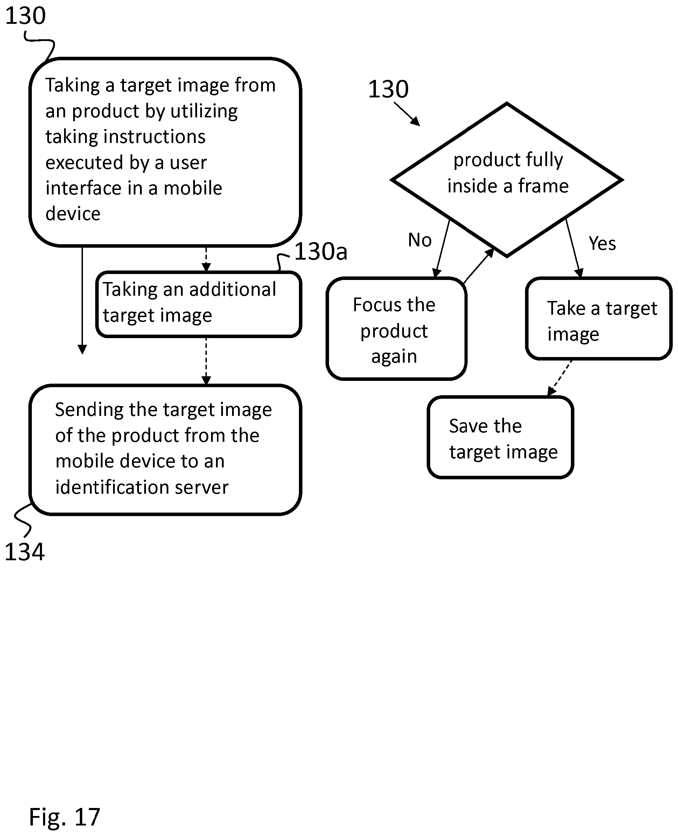

Figure 17 shows a schematic presentation of taking a target image and the acts that are performed by the user of the user device in the user device. In 130 a target image from a product is taken by utilizing image taking instructions stored in the memory and executed by the processor in the user device. The image taking instructions may comprise detecting if the product is fully inside a frame or guiding that the product should be fully inside the frame so that a target image is allowed to be taken. If the product is not fully inside the frame provided in the user interface of the user device then the user is guided to focus the product again to fit inside the frame. After the target image is taken the target image can be saved automatically to the memory of the user device or the user can save it to the memory of the user device or alternatively (reason for the dashed line) the target image may not be saved at all but the target image can be sent to the identification server without saving it to the user device. In 134 the target image of the product is sent from the user device to an identification server.

The image taking instructions may further instruct the user of the mobile device 10 to take the target image in a certain angle with respect to the product. These kinds of image taking instructions may be based on one or more accelerometers provided in the user device which give information relating to the angle of the user device with respect to the vertical and/or horizontal direction when the user device is stationary. This provides information about the angle in which the target image is taken with respect to the product when the product is placed on a horizontal surface.

In some embodiments, the user interface 12 may instruct in taking the target image. Accordingly, the user device 10 or the user interface 12 may instruct, by utilizing image taking instructions stored in the user device memory 15 and executed by the user device processor 16, in taking the target image. The user interface 12 in the mobile device 10 of the system 1 may be operable to instruct the user in taking the target image.

In one embodiment, the user device 10 or the user interface 12 may instruct, by utilizing image taking instructions stored in the user device memory 15 and executed by the user device processor 16, in taking the target image on a predetermined angle or in predetermined angles. The user device 10 may comprise one or more accelerometers for determining the position or angle of the user device 10 or the camera in the user device 10. Accordingly, the accelerometer may be operable to determining or calculating position or posture of the user device 10, for example by utilizing image taking instructions stored in the user device memory 15 and executed by the user device processor 16 of the user device 10. Accordingly, the user device 10 or the user interface 12 may instruct, by utilizing image taking instructions stored in the user device memory 15 and executed by the user device processor 16, in taking the target image on a predetermined angle or in predetermined angles based on the calculation or determination of the position or posture of the user device 10 with the one or more accelerometers.

In one embodiment, the user device 10 or the user interface 12 may instruct, by utilizing image taking instructions stored in the user device memory 15 and executed by the user device processor 16, placing the product on a horizontal plane or surface before taking the target image. Then, the user device 10 or the user interface 12 may instruct taking the target image in predetermined angle or angles.

According to the above mentioned, the target image may be instructed to be taken in one angle or turning the camera in the mobile device 10 in different angles during taking the target image.

In one embodiment, the user interface 12 in the user device 30 is operable in calculating, by utilizing image taking instructions stored in the user device memory 15 and executed by the user device processor 16 and the accelerometer, the position or posture of the user device 10 or the camera in the user device 10 during taking the target image. The calculated position or posture of the mobile device 10 or the camera in the user device during taking the target image may be send to the identification server 20 together with the target image, or separately. The calculated position or posture of the user device 10 or the camera in the user device may further be stored to the product profile. In this embodiment, the user device 10 or the user interface 12 may instruct, by utilizing image taking instructions stored in the user device memory 15 and executed by the user device processor 16, placing the product on a horizontal plane or surface before taking the target image. Then, the position or posture of the user device 10 or the camera in the user device is calculated during taking the target image.

In one embodiment, the user device 10 or the user interface 12 may instruct, by utilizing image taking instructions stored in the user device memory 15 and executed by the user device processor 16, in taking the target image on a predetermined angle or in predetermined angles based on the data provided to the product profile or reference identification algorithm. This data in the product profile or in the reference identification algorithm may be based on the image taking angle or angles of the original product video, as described above. Thus, the user device 10 or the user interface 12 may instruct to take the target in an angle corresponding the angle or angles in which the original product video is taken. Alternatively, the position or posture data of the target image and the original product video may be used, by utilizing instructions stored in the memory 24 and executed by the processor 22 of the identification server 20, to calculate or determine the authenticity of the product. Alternatively, the position or posture data of the target image and the original product video may be used, by utilizing instructions stored in the memory 24 and executed by the processor 22 of the identification server 20, to pre-process the separate original images and/or the target image. Furthermore, in some embodiment the position or posture data of the original product video may be used may be used in determining or calculating two- or three-dimensional shape or dimensions of the original product by utilizing instructions stored in the administrator device memory 35 and executed by the administrator device processor 36 and the accelerometer or by utilizing instructions stored in the memory 24 and executed by processor 22 of the identification server 20 and the accelerometer.

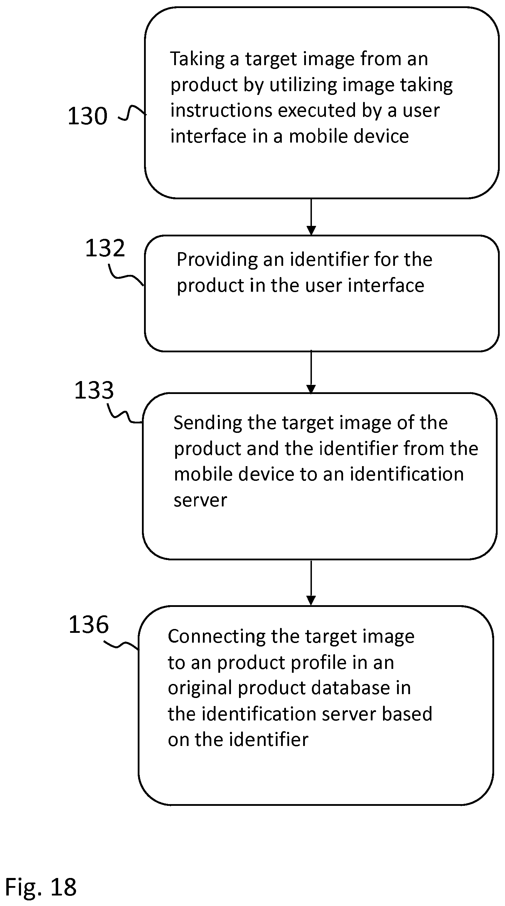

Figure 18 shows process steps 130, 132, 133 and 136 which illustrate another embodiment of the taking of the target image by the user of the user device and sending it from the user device to the identification server. In 130 a target image of the product that is a suspected counterfeit product is taken with a user device by utilizing image taking instructions provided in the user interface. In 132 the user of the user device provides an identifier for the product in the user interface for example by selecting a name for the product from a drop-down menu provided in the user interface, or by writing a name for the product. The identifier can be provided for the product also by speaking it to a speech-detector in the user device or otherwise communicating the identifier to the user device. The identifier is for speeding up the authenticity identification in the identification server such that not all the original product data must be searched through but the search can be limited to products that are identified to be similar to the product of the target image. In 133 the target image and the identifier are sent to the identification server from the user device and in 136 the target image is connected to a product profile in an original product database in the identification server based on the identifier. The product profile comprises information about the original product and the reference algorithm of the product profile is connected to the product profile.

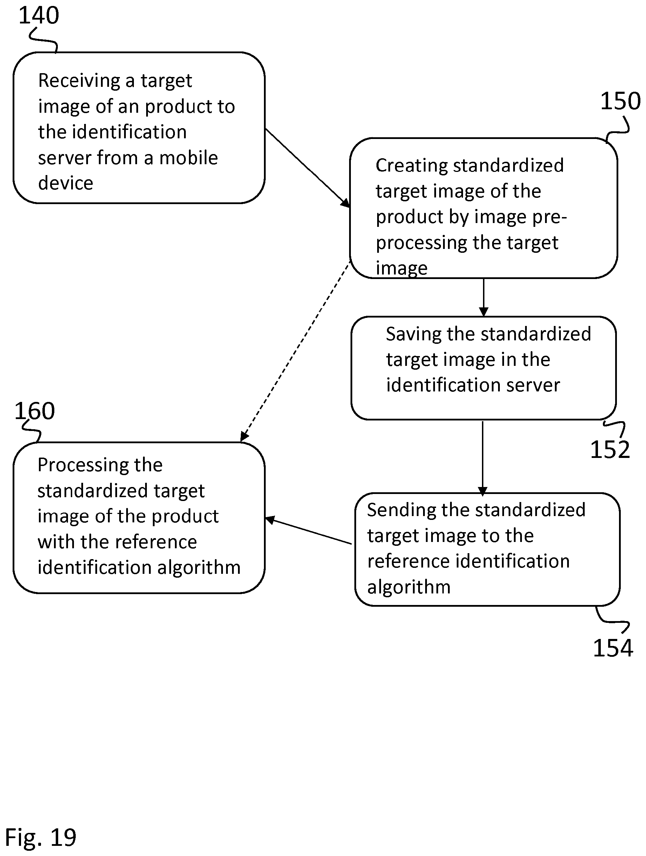

Figure 19 shows a schematic presentation of a step of receiving a target image. In 140 the identification server receives the target image of the product from a user device and in 150 the target image of the product is processed by an image pre-processing so that the target image is standardized. In other words, a standardized target image is created from the target image of the product by image pre-processing the target image. The image pre-processing can be for example cropping or scaling or rotating or flipping the target image, filtering the target image or adjusting the target image such that disturbances in the target image are removed in order to facilitate the authenticity identification. Filtering may comprise for example adjusting brightness, contrast, structure, noise, colour, sharpness, shadows or saturation of the image. After the creating the standardized target image step 150 the standardized target image can be processed with the reference identification algorithm in step 160 or alternatively the standardized target image can be saved in the identification server, step 152, and then the standardized target image can be sent to the reference identification algorithm, in step 154, for processing the standardized target image of the product with the reference identification algorithm in step 160.

Accordingly, the standardization of the target mage may be carried out by automatically creating, by utilizing instructions stored in a memory 24 and executed by a processor 22 of the identification server 20, a standardized target image by image pre-processing the target image, or by creating on request of the user or automatically creating, by utilizing instructions stored in the user device memory 15 and executed by the user device processor 16 of the user device 10, a standardized target image by image pre-processing the target image in the user device.

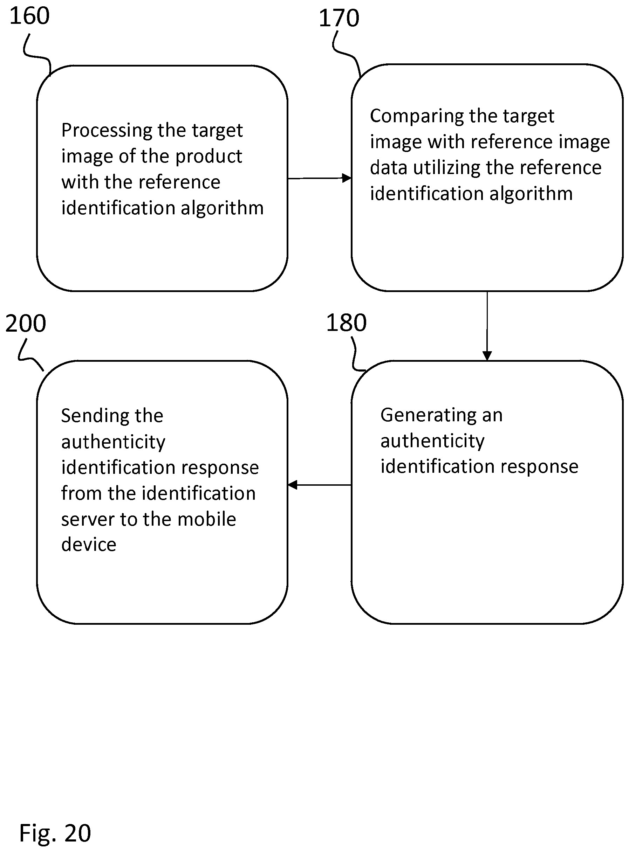

Figure 20 shows a schematic presentation of a step of processing a target image in which the target image of the product is processed with the reference identification algorithm in step 160, in 170 the target image is compared with the reference image data of the original product utilizing the reference identification algorithm. After comparing the target image with reference image data an authenticity identification response is generated in 180 and sent from the identification server to the user device in 200.

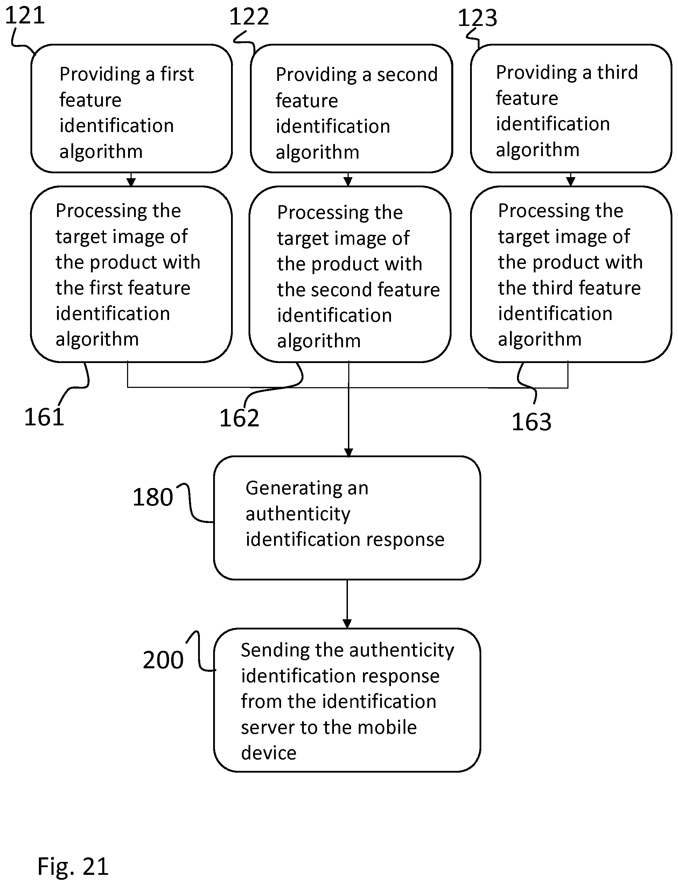

Figure 21 shows a schematic presentation of a step of processing a target image with feature identification algorithms in parallel in which several features of the target image are processed simultaneously or substantially simultaneously and then the outputs of the authenticity identification of the features are combined and one common authenticity identification response is sent from the identification server to the user device. In the example shown in figure 21 three features are processed in parallel such that a first, a second and a third feature identification algorithm are provided in the identification server and then the target image of the product is processed simultaneously or substantially simultaneously with the first feature identification algorithm, with the second feature identification algorithm and with the third feature identification algorithm. The first feature identification algorithm, the second feature identification algorithm and the third feature identification algorithm generate each an output which the outputs are combined such that a one common authenticity identification response is generated and sent to the user device.

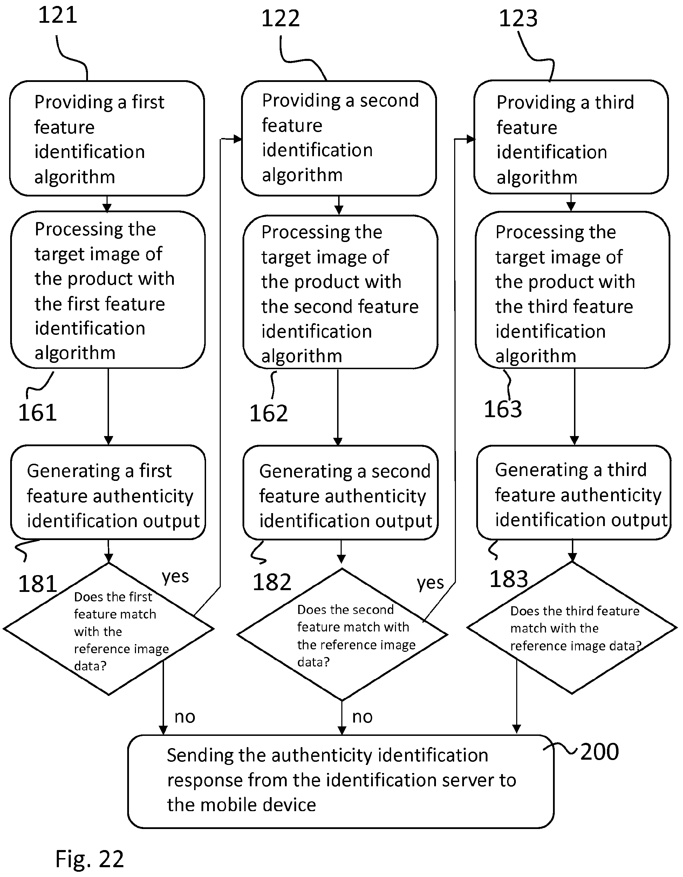

Figure 22 shows a schematic presentation of a step of processing a target image with feature identification algorithms in series. Figure 22 shows an example in which the target image is processed feature by feature in order to find out whether the product of the target image is authentic or not. Several feature identification algorithms are provided in the identification server and in the example there are three feature identification algorithms; a first feature identification algorithm, a second feature identification algorithm and a third feature identification algorithm provided. The target image of the product is first processed with the first feature identification algorithm and a first feature authenticity identification response is generated based on the processing with the first feature identification algorithm. If the first feature matches with the reference image data then the process continues to the second feature identification step, if the first feature does not match with the reference data then an authenticity identification response is sent from the identification server to the user device indicating that the product in the target image is not authentic. In the second feature identification step the target image of the product is processed with the second feature identification algorithm and a second feature authenticity identification response is generated based on the processing with the second feature identification algorithm. If the second feature matches with the reference data then the process continues to the third feature identification step, if the second feature does not match with the reference data then an authenticity identification response is sent from the identification server to the user device indicating that the product in the target image is not authentic. In the third feature identification step the target image of the product is processed similarly as in previous steps and now with the third feature identification algorithm and a third feature authenticity identification response is generated based on the processing with the third feature identification algorithm. As this example of processing a target image with feature identification algorithms in series comprises identification of three features this last step which has generated a third feature authenticity identification response gives the final authenticity identification response to the user device. If the third feature matches with the reference image data then the authenticity identification response is that the product in the target image is authentic, if it does not match with the reference image data then the authenticity identification response is that the product of the target image is not authentic. Although figure 22 shows that after the comparing of first feature and the reference image data there is a step 122 in which the second feature identification algorithm is provided and similarly after the comparing of second feature and the reference image data a step 123, the feature identification algorithms are preferably provided before the processing of the first image of the product starts so that in actual process after the comparing step there will be step 162 or 163.

It should be further noted, that
The authenticity identification response in all the examples of this application does not need to be that the product of the target image is authentic or not authentic but the authenticity identification response can be for example an estimate about the authenticity. The authenticity identification response in all examples can be a visual response or an oral response, a text response or a numeral response, or any other type of response which can illustrate the authenticity or the estimate of the authenticity.

The invention has been described above with reference to the examples shown in the figures. However, the invention is in no way restricted to the above examples but may vary within the scope of the claims.

## Claims

1. Method for identifying authenticity of an object (700, 800, 900) with a user device (10) having a user device processor (16) and a user device memory (15), the method comprising the steps of:
a) providing, in an identification server (20), a reference identification algorithm trained with reference image data of an original object (700, 800, 900);
b) taking, by utilizing image taking instructions stored in the user device memory (15) and executed by the user device processor (16), target images of the object (700, 800, 900) in different angles;
c) receiving, in the identification server (20), the target images of the object (700, 800, 900) from the user device (10) over a communication network (100);
d) processing, by utilizing instructions stored in the memory (24) and executed by the processor (22) of the identification server (20), the target images with the reference identification algorithm trained with the reference image data of the original object (700, 800, 900);
e) generating, by utilizing the reference identification algorithm and instructions stored in the memory (24) and executed by the processor (22) of the identification server (20), an authenticity identification output in the identification server (20); and
f) sending, by utilizing instructions stored in the memory (24) and executed by the processor (22) of the identification server (20), an authenticity identification response based on the authenticity identification output from the identification server (20) to the user device (10),
**characterized in that**:
- the step a) further comprises providing, in the identification server (20), two or more feature identification algorithms trained with the reference image data of the original object (700, 800, 900) as the reference identification algorithm for identifying separate features of the original object (700, 800, 900); and
- the step d) further comprises processing, by utilizing instructions stored in the memory (24) and executed by the processor (22) of the identification server (20), the target images with the two or more feature identification algorithms trained with the reference image data of the original the object (700, 800, 900), and that the method further comprises:
- processing, by utilizing instructions stored in the memory (24) and executed by the processor (22) of the identification server (20), the target images with one or more of the two or more feature identification algorithms in series,
- generating, by utilizing the one or more of the two or more feature identification algorithms and instructions stored in the memory (24) and executed by the processor (22) of the identification server (20), an output from the one or more of the two or more feature identification algorithms, and
- sending, by utilizing instructions stored in the memory (24) and executed by the processor (22) of the identification server (20), one authenticity identification response based on the outputs of the one or more features identification algorithms from the identification server (20) to the user device (10), and
that the features are processed until a feature is outside a preselected range or until all the features are processed and found to be in the preselected range, and that the step of processing the target images with one of the two or more feature identification algorithms in series comprises steps of:
g) comparing, by utilizing instructions stored in the memory (24) and executed by the processor (22) of the identification server (20), one feature of the target images with the reference image data utilizing the one of the two or more feature identification algorithms;
h) generating, by utilizing instructions stored in the memory (24) and executed by the processor (22) of the identification server (20), a first feature authenticity identification output in the identification server (20); and
i) based on the first feature authenticity identification output,
if the first feature authenticity identification output is not within a preselected range, automatically sending, by utilizing instructions stored in the memory (24) and executed by the processor (22) of the identification server (20), the authenticity identification response based on the first feature authenticity identification output from the identification server (20) to the user device (10); or
if the first feature authenticity identification output is within a preselected range, performing steps j)-l) which comprise:
j) comparing, by utilizing instructions stored in the memory (24) and executed by the processor (22) of the identification server (20), a subsequent feature of the target images with the reference image data utilizing one of the two or more feature identification algorithms;
k) generating, by utilizing instructions stored in the memory (24) and executed by the processor (22) of the identification server (20), a subsequent feature authenticity identification output in the identification server (20); and
l) based on the subsequent feature authenticity identification output;
if the subsequent feature authenticity identification output is not within a preselected range automatically sending, by utilizing instructions stored in the memory (24) and executed by the processor (22) of the identification server (20), the authenticity identification response based on the subsequent feature authenticity identification output from the identification server (20) to the user device (10), or
if the subsequent feature authenticity identification output is within a preselected range automatically repeating, by utilizing instructions stored in the memory (24) and executed by the processor (22) of the identification server (20), the steps j) and l), or
if the subsequent feature authenticity identification output is within a preselected range sending, by utilizing instructions stored in the memory (24) and executed by the processor (22) of the identification server (20), a final authenticity identification response based on the subsequent feature authenticity identification output from the identification server (20) to the user device (10).

2. Method for identifying authenticity of an object (700, 800, 900) according to claim 1, **characterized in that** the step b) further comprises:
- creating, by utilizing instructions stored in a memory (24) and executed by a processor (22) of the identification server (20), one or more standardized target images by image pre-processing the target image; or
- creating, by utilizing instructions stored in the user device memory (15) and executed by the user device processor (16) of the user device (10), one or more standardized target images by image pre-processing the target images in the user device.

3. Method for identifying authenticity of an object (700, 800, 900) according to claim 1 or 2, **characterized in that** the method further comprises step m):
- sending, by utilizing instructions stored in the user device memory (15) and executed by the user device processor (16) of the user device (10), the target images of the object from the user device (10) to the identification server (20); or
- taking, by utilizing image taking instructions stored in the user device memory (15) and executed by the user device processor (16) of the user device (10), the target images of the object with an imaging device (14) in the user device (10) on request by a user of the user device (10); or
- taking, by utilizing image taking instructions stored in the user device memory (15) and executed by the user device processor (16) of the user device (10), the target images of the object with an imaging device (14) in the user device (10) on request by a user of the user device (10) and sending, by utilizing instructions stored in the user device memory (15) and executed by the user device processor (16) of the user device (10), the target image of the object (700, 800, 900) from the user device (10) to the identification server (20).

4. Method for identifying authenticity of an object (700, 800, 900) according to claim 3, **characterized in that** the step m) further comprises:
- sending, by utilizing instructions stored in the user device memory (15) and executed by the user device processor (16) of the user device (10), the target images of the object from the user device (10) to the identification server (20) with a user interface in the user device (10) on request by a user of the user device (10); or
- providing, by utilizing instructions stored in the user device memory (15) and executed by the user device processor (16) of the user device (10), an identifier of the object (700, 800, 900) in a user interface (12) on request by a user of the user device (10);
- sending, by utilizing instructions stored in the user device memory (15) and executed by the user device processor (16) of the user device (10), the target images of the object (700, 800, 900) and the identifier from the user device (10) to the identification server (20) with the user interface (12) on request by a user of the user device (10);
- automatically selecting, by utilizing instructions stored in the memory (24) and executed by the processor (22) of the identification server (20), the reference identification algorithm corresponding the identifier.

5. Method for identifying authenticity of an object (700, 800, 900) according to any one of claims 1 to 4, **characterized in that** the method further comprises a step of:
- storing, by utilizing instructions stored in the memory (24) and executed by the processor (22) of the identification server (20), the authenticity identification response to a target image database (27) in one or more storage devices (29) in the identification server; or
- storing, by utilizing instructions stored in the memory (24) and executed by the processor (22) of the identification server (20), the authenticity identification response to a target image database (27) in one or more storage devices (29) connected to the identification server (20) over a communication network (100).

6. A method for identifying authenticity of an object (700, 800, 900) according to any one of claims 1 to 5, **characterized in that** the step a) comprises:
- providing at least one original object database (25), stored in one or more storage devices (28), for one or more object profiles, each comprising original object data of an original object (700, 800, 900);
- creating, with an administrator device (30), an object profile on a request by an administer for an original object (700, 800, 900), the object profile comprising original object data of the original object (700, 800, 900), and storing the object profile to the at least one original object database (25) in the one or more storage devices (28);
- receiving one or more original object images as reference image data to an identification server (20) over the communication network (100);
- providing a basic identification algorithm from an algorithm service (26);
- applying, by utilizing instructions stored in the memory (24) and executed by the processor (22) of the identification server (20), the one or more original object images as input data to the basic identification algorithm;
- generating, by utilizing instructions of the algorithm service (26), from the input data the reference identification algorithm of the original object (700, 800, 900) by training the basic identification algorithm with the one or more original object images; and
- connecting, by utilizing instructions stored in the memory (24) and executed by the processor (22) of the identification server (20), the reference identification algorithm of the original object (700, 800, 900) to the object profile in the at least one original object database (25), stored the in one or more storage devices (28).

7. A method for identifying authenticity of an object (700, 800, 900) according to claim 6, **characterized in that** the receiving the one or more original object images as the reference image data to the identification server (20) comprises:
- sending, by utilizing instructions stored in a memory (35) and executed by a processor (36) of the administrator device (30), the one or more original object images as the reference image data to the identification server (20) over the communication network (100); and
- receiving the one or more original object images as the reference image data to the identification server (20) over the communication network (100); or
- taking, by utilizing instructions stored in a memory (35) and executed by a processor (36) of the administrator device (30), the one or more original object images of the original object (700, 800, 900) with an imaging device (34) in the administrator device (30) on request of the administrator;
- sending, by utilizing instructions stored in a memory (35) and executed by a processor (36) of the administrator device (30), the one or more original object images as the reference image data to the identification server (20) over the communication network (100); and
- receiving the one or more original object images as the reference image data to the identification server (20) over the communication network (100).

8. A method for identifying authenticity of an object (700, 800, 900) according to claim 6 or 7, **characterized in that** the method further comprises creating, by utilizing instructions stored in the memory (24) and executed by the processor (22) of the identification server (20), one or more standardized original images by image pre-processing the one or more original object images before applying the one or more original object images as input data to the basic identification algorithm for generating the reference identification algorithm by training the basic identification algorithm with the one or more original object images.

9. A method for identifying authenticity of an object (700, 800, 900) according to any one of claims 6 to 8, **characterized in that** the applying the one or more standardized original images as input data to the basic identification algorithm comprises:
- generating, by utilizing instructions of the algorithm service (26), the two or more feature reference identification algorithms for identifying separate features of the original object (700, 800, 900); or
- generating, by utilizing instructions of the algorithm service (26), the two or more separate feature reference identification algorithms for identifying separate features of the original object (700, 800, 900); or
- generating, by utilizing instructions of the algorithm service (26), the reference identification algorithm comprising the two or more feature reference identification algorithms for identifying separate features of the original object (700, 800, 900).

## Patentansprüche

1. Verfahren zum Identifizieren der Echtheit eines Objekts (700, 800, 900) mit einer Benutzervorrichtung (10), die einen Benutzervorrichtungsprozessor (16) und einen Benutzervorrichtungsspeicher (15) aufweist, wobei das Verfahren die folgenden Schritte umfasst:
a) Bereitstellen, in einem Identifikationsserver (20), eines Referenzidentifikationsalgorithmus, der mit Referenzbilddaten eines Originalobjekts (700, 800, 900) trainiert ist;
b) Aufnehmen, durch Verwenden von in dem Benutzervorrichtungsspeicher (15) gespeicherten und von dem Benutzervorrichtungsprozessor (16) ausgeführten Bildaufnahmeanweisungen, von Zielbildern des Objekts (700, 800, 900) aus verschiedenen Winkeln;
c) Empfangen, in dem Identifikationsserver (20), der Zielbilder des Objekts (700, 800, 900) von der Benutzervorrichtung (10) über ein Kommunikationsnetzwerk (100);
d) Verarbeiten, durch Verwenden von in dem Speicher (24) gespeicherten und von dem Prozessor (22) des Identifikationsservers (20) ausgeführten Anweisungen, der Zielbilder mit dem Referenzidentifikationsalgorithmus, der mit den Referenzbilddaten des Originalobjekts (700, 800, 900) trainiert ist;
e) Erzeugen, durch Verwenden des Referenzidentifikationsalgorithmus und von in dem Speicher (24) gespeicherten und von dem Prozessor (22) des Identifikationsservers (20) ausgeführten Anweisungen, einer Echtheitsidentifikationsausgabe in dem Identifikationsserver (20); und
f) Senden, durch Verwenden von in dem Speicher (24) gespeicherten und von dem Prozessor (22) des Identifikationsservers (20) ausgeführten Anweisungen, einer Echtheitsidentifikationsantwort auf Basis der Echtheitsidentifikationsausgabe von dem Identifikationsserver (20) an die Benutzervorrichtung (10),
**gekennzeichnet dadurch, dass**:
- der Schritt a) ferner das Bereitstellen, in dem Identifikationsserver (20), von zwei oder mehreren Merkmalidentifikationsalgorithmen, die mit den Referenzbilddaten des Originalobjekts (700, 800, 900) trainiert sind, als den Referenzidentifikationsalgorithmus zum Identifizieren von Einzelmerkmalen des Originalobjekts (700, 800, 900) umfasst; und
- der Schritt d) ferner das Verarbeiten, durch Verwenden von in dem Speicher (24) gespeicherten und von dem Prozessor (22) des Identifikationsservers (20) ausgeführten Anweisungen, der Zielbilder mit den zwei oder den mehreren Merkmalidentifikationsalgorithmen, die mit den Referenzbilddaten des Originalobjekts (700, 800, 900) trainiert sind, umfasst und dadurch, dass das Verfahren ferner Folgendes umfasst:
- Verarbeiten, durch Verwenden von in dem Speicher (24) gespeicherten und von dem Prozessor (22) des Identifikationsservers (20) ausgeführten Anweisungen, der Zielbilder mit einem oder mehreren der zwei oder mehreren Merkmalidentifikationsalgorithmen hintereinander,
- Erzeugen, durch Verwenden des einen oder der mehreren Merkmalidentifikationsalgorithmen und von in dem Speicher (24) gespeicherten und von dem Prozessor (22) des Identifikationsservers (20) ausgeführten Anweisungen, einer Ausgabe von dem einen oder den mehreren der zwei oder mehreren Merkmalidentifikationsalgorithmen, und
- Senden, durch Verwenden von in dem Speicher (24) gespeicherten und von dem Prozessor (22) des Identifikationsservers (20) ausgeführten Anweisungen, einer Echtheitsidentifikationsantwort auf Basis der Ausgaben des einen oder der mehreren Merkmalidentifikationsalgorithmen von dem Identifikationsserver (20) an die Benutzervorrichtung (10), und
dadurch, dass die Merkmale verarbeitet werden, bis ein Merkmal außerhalb eines vorausgewählten Bereichs liegt oder bis alle die Merkmale verarbeitet sind und für in dem vorausgewählten Bereich liegend befunden werden, und dadurch, dass der Schritt des Verarbeitens der Zielbilder mit einem der zwei oder mehreren Merkmalidentifikationsalgorithmen hintereinander die folgenden Schritte umfasst:
g) Vergleichen, durch Verwenden von in dem Speicher (24) gespeicherten und von dem Prozessor (22) des Identifikationsservers (20) ausgeführten Anweisungen, eines Merkmals der Zielbilder mit den Referenzbilddaten unter Verwendung des einen der zwei oder mehreren Merkmalidentifikationsalgorithmen;
h) Erzeugen, durch Verwenden von in dem Speicher (24) gespeicherten und von dem Prozessor (22) des Identifikationsservers (20) ausgeführten Anweisungen, einer ersten Merkmalechtheitsidentifikationsausgabe in dem Identifikationsserver (20); und
i) auf Basis der ersten Merkmalechtheitsidentifikationsausgabe,
wenn die erste Merkmalechtheitsidentifikationsausgabe nicht innerhalb eines vorausgewählten Bereichs liegt, automatisches Senden, durch Verwenden von in dem Speicher (24) gespeicherten und von dem Prozessor (22) des Identifikationsservers (20) ausgeführten Anweisungen, der Echtheitsidentifikationsantwort auf Basis der ersten Merkmalechtheitsidentifikationsausgabe von dem Identifikationsserver (20) an die Benutzervorrichtung (10); oder
wenn die erste Merkmalechtheitsidentifikationsausgabe innerhalb eines vorausgewählten Bereichs liegt, Durchführen der Schritte j) bis I), die Folgendes umfassen:
j) Vergleichen, durch Verwenden von in dem Speicher (24) gespeicherten und von dem Prozessor (22) des Identifikationsservers (20) ausgeführten Anweisungen, eines anschließenden Merkmals der Zielbilder mit den Referenzbilddaten unter Verwendung von einem der zwei oder mehreren Merkmalidentifikationsalgorithmen;
k) Erzeugen, durch Verwenden von in dem Speicher (24) gespeicherten und von dem Prozessor (22) des Identifikationsservers (20) ausgeführten Anweisungen, einer anschließenden Merkmalechtheitsidentifikationsausgabe in dem Identifikationsserver (20); und
I) auf Basis der anschließenden Merkmalechtheitsidentifikationsausgabe;
wenn die anschließende Merkmalechtheitsidentifikationsausgabe nicht innerhalb eines vorausgewählten Bereichs liegt, automatisches Senden, durch Verwenden von in dem Speicher (24) gespeicherten und von dem Prozessor (22) des Identifikationsservers (20) ausgeführten Anweisungen, der Echtheitsidentifikationsantwort auf Basis der anschließenden Merkmalechtheitsidentifikationsausgabe von dem Identifikationsserver (20) an die Benutzervorrichtung (10), oder
wenn die anschließende Merkmalechtheitsidentifikationsausgabe innerhalb eines vorausgewählten Bereichs liegt, automatisches Wiederholen, durch Verwenden von in dem Speicher (24) gespeicherten und von dem Prozessor (22) des Identifikationsservers (20) ausgeführten Anweisungen, der Schritte j) und I), oder
wenn die anschließende Merkmalechtheitsidentifikationsausgabe innerhalb eines vorausgewählten Bereichs liegt, Senden, durch Verwenden von in dem Speicher (24) gespeicherten und von dem Prozessor (22) des Identifikationsservers (20) ausgeführten Anweisungen, einer endgültigen Echtheitsidentifikationsantwort auf Basis der anschließenden Merkmalechtheitsidentifikationsausgabe von dem Identifikationsserver (20) an die Benutzervorrichtung (10).

2. Verfahren zum Identifizieren der Echtheit eines Objekts (700, 800, 900) nach Anspruch 1, **gekennzeichnet dadurch, dass** der Schritt b) ferner Folgendes umfasst:
- Erstellen, durch Verwenden von in einem Speicher (24) gespeicherten und von einem Prozessor (22) des Identifikationsservers (20) ausgeführten Anweisungen, eines oder mehrerer standardisierter Zielbilder durch Bildvorverarbeiten des Zielbildes; oder
- Erstellen, durch Verwenden von in dem Benutzervorrichtungsspeicher (15) gespeicherten und von dem Benutzervorrichtungsprozessor (16) der Benutzervorrichtung (10) ausgeführten Anweisungen, eines oder mehrerer standardisierter Zielbilder durch Bildvorverarbeiten der Zielbilder in der Benutzervorrichtung.

3. Verfahren zum Identifizieren der Echtheit eines Objekts (700, 800, 900) nach Anspruch 1 oder 2, **gekennzeichnet dadurch, dass** das Verfahren ferner Schritt m) umfasst:
- Senden, durch Verwenden von in dem Benutzervorrichtungsspeicher (15) gespeicherten und von dem Benutzervorrichtungsprozessor (16) der Benutzervorrichtung (10) ausgeführten Anweisungen, der Zielbilder des Objekts von der Benutzervorrichtung (10) an den Identifikationsserver (20); oder
- Aufnehmen, durch Verwenden von in dem Benutzervorrichtungsspeicher (15) gespeicherten und von dem Benutzervorrichtungsprozessor (16) der Benutzervorrichtung (10) ausgeführten Bildaufnahmeanweisungen, der Zielbilder des Objekts mit einer Bildgebungsvorrichtung (14) in der Benutzervorrichtung (10) auf Anfrage durch einen Benutzer der Benutzervorrichtung (10); oder
- Aufnehmen, durch Verwenden von in dem Benutzervorrichtungsspeicher (15) gespeicherten und von dem Benutzervorrichtungsprozessor (16) der Benutzervorrichtung (10) ausgeführten Bildaufnahmeanweisungen, der Zielbilder des Objekts mit einer Bildgebungsvorrichtung (14) in der Benutzervorrichtung (10) auf Anfrage durch einen Benutzer der Benutzervorrichtung (10) und Senden, durch Verwenden von in dem Benutzervorrichtungsspeicher (15) gespeicherten und von dem Benutzervorrichtungsprozessor (16) der Benutzervorrichtung (10) ausgeführten Anweisungen, des Zielbildes des Objekts (700, 800, 900) von der Benutzervorrichtung (10) an den Identifikationsserver (20).

4. Verfahren zum Identifizieren der Echtheit eines Objekts (700, 800, 900) nach Anspruch 3, **gekennzeichnet dadurch, dass** der Schritt m) ferner Folgendes umfasst:
- Senden, durch Verwenden von in dem Benutzervorrichtungsspeicher (15) gespeicherten und von dem Benutzervorrichtungsprozessor (16) der Benutzervorrichtung (10) ausgeführten Anweisungen, der Zielbilder des Objekts von der Benutzervorrichtung (10) an den Identifikationsserver (20) mit einer Benutzerschnittstelle in der Benutzervorrichtung (10) auf Anfrage durch einen Benutzer der Benutzervorrichtung (10); oder
- Bereitstellen, durch Verwenden von in dem Benutzervorrichtungsspeicher (15) gespeicherten und von dem Benutzervorrichtungsprozessor (16) der Benutzervorrichtung (10) ausgeführten Anweisungen, einer Kennung des Objekts (700, 800, 900) in einer Benutzerschnittstelle (12) auf Anfrage durch einen Benutzer der Benutzervorrichtung (10);
- Senden, durch Verwenden von in dem Benutzervorrichtungsspeicher (15) gespeicherten und von dem Benutzervorrichtungsprozessor (16) der Benutzervorrichtung (10) ausgeführten Anweisungen, der Zielbilder des Objekts (700, 800, 900) und der Kennung von der Benutzervorrichtung (10) an den Identifikationsserver (20) mit der Benutzerschnittstelle (12) auf Anfrage durch einen Benutzer der Benutzervorrichtung (10);
- automatisches Auswählen, durch Verwenden von in dem Speicher (24) gespeicherten und von dem Prozessor (22) des Identifikationsservers (20) ausgeführten Anweisungen, des Referenzidentifikationsalgorithmus, der der Kennung entspricht.

5. Verfahren zum Identifizieren der Echtheit eines Objekts (700, 800, 900) nach einem der Ansprüche 1 bis 4, **gekennzeichnet dadurch, dass** das Verfahren ferner einen folgenden Schritt umfasst:
- Speichern, durch Verwenden von in dem Speicher (24) gespeicherten und von dem Prozessor (22) des Identifikationsservers (20) ausgeführten Anweisungen, der Echtheitsidentifikationsantwort in einer Zielbilddatenbank (27) in einer oder mehreren Speichervorrichtungen (29) in dem Identifikationsserver; oder
- Speichern, durch Verwenden von in dem Speicher (24) gespeicherten und von dem Prozessor (22) des Identifikationsservers (20) ausgeführten Anweisungen, der Echtheitsidentifikationsantwort in einer Zielbilddatenbank (27) in einer oder mehreren Speichervorrichtungen (29), die mit dem Identifikationsserver (20) über ein Kommunikationsnetzwerk (100) verbunden sind.

6. Verfahren zum Identifizieren der Echtheit eines Objekts (700, 800, 900) nach einem der Ansprüche 1 bis 5, **gekennzeichnet dadurch, dass** der Schritt a) ferner Folgendes umfasst:
- Bereitstellen von mindestens einer Originalobjektdatenbank (25), die in einer oder mehreren Speichervorrichtungen (28) gespeichert ist, für ein oder mehrere Objektprofile, von denen jedes Originalobjektdaten eines Originalobjekts (700, 800, 900) umfasst;
- Erstellen, mit einer Administratorvorrichtung (30), eines Objektprofils auf Anfrage durch einen Administrator für ein Originalobjekt (700, 800, 900), wobei das Objektprofil Originalobjektdaten des Originalobjekts (700, 800, 900) umfasst, und Speichern des Objektprofils in der mindestens einen Originalobjektdatenbank (25) in der einen oder den mehreren Speichervorrichtungen (28);
- Empfangen eines oder mehrerer Originalobjektbilder als Referenzbilddaten an einem Identifikationsserver (20) über das Kommunikationsnetzwerk (100);
- Bereitstellen eines Basisidentifikationsalgorithmus von einem Algorithmusdienst (26);
- Anwenden, durch Verwenden von in dem Speicher (24) gespeicherten und von dem Prozessor (22) des Identifikationsservers (20) ausgeführten Anweisungen, des einen oder der mehreren Originalobjektbilder als Eingabedaten in den Basisidentifikationsalgorithmus;
- Erzeugen, durch Verwenden von Anweisungen des Algorithmusdienstes (26), aus den Eingabedaten, des Referenzidentifikationsalgorithmus des Originalobjekts (700, 800, 900) durch Trainieren des Basisidentifikationsalgorithmus mit dem einen oder den mehreren Originalobjektbildern; und
- Verbinden, durch Verwenden von in dem Speicher (24) gespeicherten und von dem Prozessor (22) des Identifikationsservers (20) ausgeführten Anweisungen, des Referenzidentifikationsalgorithmus des Originalobjekts (700, 800, 900) mit dem Objektprofil in der mindestens einen Originalobjektdatenbank (25), die in der einen oder den mehreren Speichervorrichtungen (28) gespeichert ist.

7. Verfahren zum Identifizieren der Echtheit eines Objekts (700, 800, 900) nach Anspruch 6, **gekennzeichnet dadurch, dass** das Empfangen des einen oder der mehreren Originalobjektbilder als die Referenzbilddaten an dem Identifikationsserver (20) Folgendes umfasst:
- Senden, durch Verwenden von in einem Speicher (35) gespeicherten und von einem Prozessor (36) der Administratorvorrichtung (30) ausgeführten Anweisungen, des einen oder der mehreren Originalobjektbilder als die Referenzbilddaten an den Identifikationsserver (20) über das Kommunikationsnetzwerk (100); und
- Empfangen des einen oder der mehreren Originalobjektbilder als die Referenzbilddaten an dem Identifikationsserver (20) über das Kommunikationsnetzwerk (100); oder
- Aufnehmen, durch Verwenden von in einem Speicher (35) gespeicherten und von einem Prozessor (36) der Administratorvorrichtung (30) ausgeführten Anweisungen, des einen oder der mehreren Originalobjektbilder des Originalobjekts (700, 800, 900) mit einer Bildgebungsvorrichtung (34) in der Administratorvorrichtung (30) auf Anfrage des Administrators;
- Senden, durch Verwenden von in einem Speicher (35) gespeicherten und von einem Prozessor (36) der Administratorvorrichtung (30) ausgeführten Anweisungen, des einen oder der mehreren Originalobjektbilder als die Referenzbilddaten an den Identifikationsserver (20) über das Kommunikationsnetzwerk (100); und
- Empfangen des einen oder der mehreren Originalobjektbilder als die Referenzbilddaten an dem Identifikationsserver (20) über das Kommunikationsnetzwerk (100).

8. Verfahren zum Identifizieren der Echtheit eines Objekts (700, 800, 900) nach Anspruch 6 oder 7, **gekennzeichnet dadurch, dass** das Verfahren ferner das Erstellen, durch Verwenden von in dem Speicher (24) gespeicherten und von dem Prozessor (22) des Identifikationsservers (20) ausgeführten Anweisungen, eines oder mehrerer standardisierter Originalbilder durch Bildvorverarbeiten des einen oder der mehreren Originalobjektbilder vor Anwenden des einen oder der mehreren Originalobjektbilder als Eingabedaten in den Basisidentifikationsalgorithmus zum Erzeugen des Referenzidentifikationsalgorithmus durch Trainieren des Basisidentifikationsalgorithmus mit dem einen oder den mehreren Originalobjektbildern umfasst.

9. Verfahren zum Identifizieren der Echtheit eines Objekts (700, 800, 900) nach einem der Ansprüche 6 bis 8, **gekennzeichnet dadurch, dass** das Anwenden des einen oder der mehreren standardisierten Originalbilder als Eingabedaten in den Basisidentifikationsalgorithmus Folgendes umfasst:
- Erzeugen, durch Verwenden von Anweisungen des Algorithmusdienstes (26), der zwei oder der mehreren Merkmalreferenzidentifikationsalgorithmen zum Identifizieren von Einzelmerkmalen des Originalobjekts (700, 800, 900); oder
- Erzeugen, durch Verwenden von Anweisungen des Algorithmusdienstes (26), der zwei oder mehreren Einzelmerkmalreferenzidentifikationsalgorithmen zum Identifizieren von Einzelmerkmalen des Originalobjekts (700, 800, 900); oder
- Erzeugen, durch Verwenden von Anweisungen des Algorithmusdienstes (26), des Referenzidentifikationsalgorithmus, umfassend die zwei oder mehreren Merkmalreferenzidentifikationsalgorithmen zum Identifizieren von Einzelmerkmalen des Originalobjekts (700, 800, 900).

## Revendications

1. Procédé d'identification de l'authenticité d'un objet (700, 800, 900) avec un dispositif utilisateur (10) ayant un processeur de dispositif utilisateur (16) et une mémoire de dispositif utilisateur (15), le procédé comprenant les étapes de :
a) fourniture, dans un serveur d'identification (20), d'un algorithme d'identification de référence entraîné avec des données d'images de référence d'un objet d'origine (700, 800, 900) ;
b) prise, en utilisant les instructions de prise d'images stockées dans la mémoire de dispositif utilisateur (15) et exécutées par le processeur de dispositif utilisateur (16), d'images cibles de l'objet (700, 800, 900) sous des angles différents ;
c) réception, dans le serveur d'identification (20), d'images cibles de l'objet (700, 800, 900) à partir du dispositif utilisateur (10) sur un réseau de communication (100) ;
d) traitement, en utilisant les instructions stockées dans la mémoire (24) et exécutées par le processeur (22) du serveur d'identification (20), des images cibles avec l'algorithme d'identification de référence entraîné avec les données d'images de référence de l'objet d'origine (700, 800, 900) ;
e) génération, en utilisant l'algorithme d'identification de référence et les instructions stockées dans la mémoire (24) et exécutées par le processeur (22) du serveur d'identification (20), d'une sortie d'identification d'authenticité dans le serveur d'identification (20) ; et
f) envoi, en utilisant les instructions stockées dans la mémoire (24) et exécutées par le processeur (22) du serveur d'identification (20), d'une réponse d'identification d'authenticité sur la base de la sortie d'identification d'authenticité du serveur d'identification (20) au dispositif utilisateur (10),
**caractérisé en ce que** :
- l'étape a) comprend en outre la fourniture, dans le serveur d'identification (20), de deux algorithmes d'identification de caractéristiques ou plus entraînés avec les données d'images de référence de l'objet d'origine (700, 800, 900) comme l'algorithme d'identification de référence pour identifier les caractéristiques distinctes de l'objet d'origine (700, 800, 900) ; et
- l'étape d) comprend en outre le traitement, en utilisant les instructions stockées dans la mémoire (24) et exécutées par le processeur (22) du serveur d'identification (20), des images cibles avec les deux algorithmes d'identification de caractéristiques ou plus entraînés avec les données d'images de référence de l'objet d'origine (700, 800, 900), et **en ce que** le procédé comprend en outre :
- le traitement, en utilisant les instructions stockées dans la mémoire (24) et exécutées par le processeur (22) du serveur d'identification (20), des images cibles avec un ou plusieurs des deux algorithmes d'identification de caractéristiques ou plus en série,
- la génération, en utilisant les un ou plusieurs des deux algorithmes d'identification de caractéristiques ou plus et les instructions stockées dans la mémoire (24) et exécutées par le processeur (22) du serveur d'identification (20), d'une sortie des un ou plusieurs des deux algorithmes d'identification de caractéristiques ou plus, et
- l'envoi, en utilisant les instructions stockées dans la mémoire (24) et exécutées par le processeur (22) du serveur d'identification (20), d'une réponse d'identification d'authenticité sur la base des sorties des un ou plusieurs algorithmes d'identification de caractéristiques du serveur d'identification (20) au dispositif utilisateur (10), et
**en ce que** les caractéristiques sont traitées jusqu'à ce qu'une caractéristique se trouve en dehors d'une plage présélectionnée ou jusqu'à ce que toutes les caractéristiques soient traitées et se trouvent dans la plage présélectionnée, et que l'étape de traitement des images cibles avec les l'un des deux algorithmes d'identification de caractéristiques ou plus en série comprend les étapes de :
g) comparaison, en utilisant les instructions stockées dans la mémoire (24) et exécutées par le processeur (22) du serveur d'identification (20), d'une caractéristique des images cibles avec les données d'images de référence en utilisant l'un des deux algorithmes d'identification de caractéristiques ou plus ;
h) génération, en utilisant les instructions stockées dans la mémoire (24) et exécutées par le processeur (22) du serveur d'identification (20), d'une première sortie d'identification d'authenticité de caractéristiques dans le serveur d'identification (20) ; et
i) sur la base de la première sortie d'identification d'authenticité de caractéristiques,
si la première sortie d'identification d'authenticité de caractéristiques ne se trouve pas à l'intérieur d'une plage présélectionnée, envoi automatique, en utilisant les instructions stockées dans la mémoire (24) et exécutées par le processeur (22) du serveur d'identification (20), de la réponse d'identification d'authenticité sur la base de la première sortie d'identification d'authenticité de caractéristiques du serveur d'identification (20) au dispositif utilisateur (10) ; ou
si la première sortie d'identification d'authenticité de caractéristiques se trouve à l'intérieur d'une plage présélectionnée, la réalisation des étapes j) à l) qui comprennent :
j) la comparaison, en utilisant les instructions stockées dans la mémoire (24) et exécutées par le processeur (22) du serveur d'identification (20), d'une caractéristique suivante des images cibles avec les données d'images de référence en utilisant l'un des deux algorithmes d'identification de caractéristiques ou plus ;
k) la génération, en utilisant les instructions stockées dans la mémoire (24) et exécutées par le processeur (22) du serveur d'identification (20), d'une sortie d'identification d'authenticité de caractéristiques suivante dans le serveur d'identification (20) ; et
l) sur la base de la sortie d'identification d'authenticité de caractéristiques suivante ;
si la sortie d'identification d'authenticité de caractéristiques suivante ne se trouve pas à l'intérieur d'une plage présélectionnée, l'envoi automatique, en utilisant les instructions stockées dans la mémoire (24) et exécutées par le processeur (22) du serveur d'identification (20), de la réponse d'identification d'authenticité sur la base de la première sortie d'identification d'authenticité de caractéristiques du serveur d'identification (20) au dispositif utilisateur (10), ou
si la sortie d'identification d'authenticité de caractéristiques suivante se trouve à l'intérieur d'une plage présélectionnée, la répétition automatique, en utilisant les instructions stockées dans la mémoire (24) et exécutées par le processeur (22) du serveur d'identification (20), des étapes j) et I), ou
si la sortie d'identification d'authenticité de caractéristiques suivante se trouve à l'intérieur d'une plage présélectionnée, l'envoi, en utilisant les instructions stockées dans la mémoire (24) et exécutées par le processeur (22) du serveur d'identification (20), d'une réponse d'identification d'authenticité finale sur la base de la sortie d'identification d'authenticité de caractéristiques suivante du serveur d'identification (20) au dispositif utilisateur (10).

2. Procédé d'identification de l'authenticité d'un objet (700, 800, 900) selon la revendication 1, **caractérisé en ce que** l'étape b) comprend en outre :
- la création, en utilisant les instructions stockées dans une mémoire (24) et exécutées par un processeur (22) du serveur d'identification (20), d'une ou plusieurs images cibles normalisées par prétraitement d'image de l'image cible ; ou
- la création, en utilisant les instructions stockées dans la mémoire de dispositif utilisateur (15) et exécutées par le processeur de dispositif utilisateur (16) du dispositif utilisateur (10), d'une ou plusieurs images cibles normalisées par prétraitement d'image des images cibles dans le dispositif utilisateur.

3. Procédé d'identification de l'authenticité d'un objet (700, 800, 900) selon la revendication 1 ou 2, **caractérisé en ce que** le procédé comprend en outre l'étape m) :
- envoi, en utilisant les instructions stockées dans la mémoire de dispositif utilisateur (15) et exécutées par le processeur de dispositif utilisateur (16) du dispositif utilisateur (10), des images cibles de l'objet du dispositif utilisateur (10) au serveur d'identification (20) ; ou
- prise, en utilisant les instructions de prise d'images stockées dans la mémoire de dispositif utilisateur (15) et exécutées par le processeur de dispositif utilisateur (16) du dispositif utilisateur (10), des images cibles de l'objet avec un dispositif d'imagerie (14) dans le dispositif utilisateur (10) à la demande d'un utilisateur du dispositif utilisateur (10) ; ou
- prise, en utilisant les instructions de prise d'images stockées dans la mémoire de dispositif utilisateur (15) et exécutées par le processeur de dispositif utilisateur (16) du dispositif utilisateur (10), des images cibles de l'objet avec un dispositif d'imagerie (14) dans le dispositif utilisateur (10) à la demande d'un utilisateur du dispositif utilisateur (10) et envoi, en utilisant les instructions stockées dans la mémoire de dispositif utilisateur (15) et exécutées par le processeur de dispositif utilisateur (16) du dispositif utilisateur (10), de l'image cible de l'objet (700, 800, 900) du dispositif utilisateur (10) au serveur d'identification (20).

4. Procédé d'identification de l'authenticité d'un objet (700, 800, 900) selon la revendication 3, **caractérisé en ce que** l'étape m) comprend en outre :
- l'envoi, en utilisant les instructions stockées dans la mémoire de dispositif utilisateur (15) et exécutées par le processeur de dispositif utilisateur (16) du dispositif utilisateur (10), des images cibles de l'objet du dispositif utilisateur (10) au serveur d'identification (20) avec une interface utilisateur dans le dispositif utilisateur (10) à la demande d'un utilisateur du dispositif utilisateur (10) ; ou
- la fourniture, en utilisant les instructions stockées dans la mémoire de dispositif utilisateur (15) et exécutées par le processeur de dispositif utilisateur (16) du dispositif utilisateur (10), d'un identifiant de l'objet (700, 800, 900) dans une interface utilisateur (12) à la demande d'un utilisateur du dispositif utilisateur (10) ;
- l'envoi, en utilisant les instructions stockées dans la mémoire de dispositif utilisateur (15) et exécutées par le processeur de dispositif utilisateur (16) du dispositif utilisateur (10), des images cibles de l'objet (700, 800, 900) et de l'identifiant du dispositif utilisateur (10) au serveur d'identification (20) avec l'interface utilisateur (12) à la demande d'un utilisateur du dispositif utilisateur (10) ;
- la sélection automatique, en utilisant les instructions stockées dans la mémoire (24) et exécutées par le processeur (22) du serveur d'identification (20), de l'algorithme d'identification de référence correspondant à l'identifiant.

5. Procédé d'identification de l'authenticité d'un objet (700, 800, 900) selon l'une quelconque des revendications 1 à 4, **caractérisé en ce que** le procédé comprend en outre une étape de :
- stockage, en utilisant les instructions stockées dans la mémoire (24) et exécutées par le processeur (22) du serveur d'identification (20), de la réponse d'identification d'authenticité au niveau d'une base de données d'images cibles (27) dans un ou plusieurs dispositifs de stockage (29) dans le serveur d'identification ; ou
- stockage, en utilisant les instructions stockées dans la mémoire (24) et exécutées par le processeur (22) du serveur d'identification (20), de la réponse d'identification d'authenticité au niveau d'une base de données d'images cibles (27) dans un ou plusieurs dispositifs de stockage (29) connectés au serveur d'identification (20) sur un réseau de communication (100).

6. Procédé d'identification de l'authenticité d'un objet (700, 800, 900) selon l'une quelconque des revendications 1 à 5, **caractérisé en ce que** l'étape a) comprend :
- la fourniture d'au moins une base de données d'objets d'origine (25), stockée dans un ou plusieurs dispositifs de stockage (28), pour un ou plusieurs profils d'objet, chacun comprenant des données d'objet d'origine d'un objet d'origine (700, 800, 900) ;
- la création, avec un dispositif d'administrateur (30), d'un profil d'objet à la demande d'un administrateur pour un objet d'origine (700, 800, 900), le profil d'objet comprenant les données d'objet d'origine de l'objet d'origine (700, 800, 900), et le stockage du profil d'objet dans l'au moins une base de données d'objets d'origine (25) dans les un ou plusieurs dispositifs de stockage (28) ;
- la réception d'une ou plusieurs images d'objets d'origine comme données d'images de référence au niveau d'un serveur d'identification (20) sur le réseau de communication (100) ;
- la fourniture d'un algorithme d'identification de base à partir d'un service algorithmique (26) ;
- l'application, en utilisant les instructions stockées dans la mémoire (24) et exécutées par le processeur (22) du serveur d'identification (20), des une ou plusieurs images d'objet d'origine comme données d'entrée à l'algorithme d'identification de base ;
- la génération, en utilisant les instructions du service algorithmique (26), à partir des données d'entrée, de l'algorithme d'identification de référence de l'objet d'origine (700, 800, 900) en entraînant l'algorithme d'identification de base avec les une ou plusieurs images d'objet d'origine ; et
- la connexion, en utilisant les instructions stockées dans la mémoire (24) et exécutées par le processeur (22) du serveur d'identification (20), de l'algorithme d'identification de référence de l'objet d'origine (700, 800, 900) au profil d'objet dans l'au moins une base de données d'objets d'origine (25), stockée dans les un ou plusieurs dispositifs de stockage (28).

7. Procédé d'identification de l'authenticité d'un objet (700, 800, 900) selon la revendication 6, **caractérisé en ce que** la réception des une ou plusieurs images d'objet d'origine comme données d'images de référence au niveau du serveur d'identification (20) comprend :
- l'envoi, en utilisant les instructions stockées dans une mémoire (35) et exécutées par un processeur (36) du dispositif d'administrateur (30), des une ou plusieurs images d'objet d'origine comme données d'images de référence au serveur d'identification (20) sur le réseau de communication (100) ; et
- la réception des une ou plusieurs images d'objet d'origine comme données d'images de référence au niveau du serveur d'identification (20) sur le réseau de communication (100) ; ou
- la prise, en utilisant les instructions stockées dans une mémoire (35) et exécutées par un processeur (36) du dispositif d'administrateur (30), des une ou plusieurs images d'objet d'origine de l'objet d'origine (700, 800, 900) avec un dispositif d'imagerie (34) dans le dispositif d'administrateur (30) à la demande de l'administrateur ;
- l'envoi, en utilisant les instructions stockées dans une mémoire (35) et exécutées par un processeur (36) du dispositif d'administrateur (30), des une ou plusieurs images d'objet d'origine comme données d'images de référence au serveur d'identification (20) sur le réseau de communication (100) ; et
- la réception des une ou plusieurs images d'objet d'origine comme données d'images de référence au niveau du serveur d'identification (20) sur le réseau de communication (100).

8. Procédé d'identification de l'authenticité d'un objet (700, 800, 900) selon la revendication 6 ou 7, **caractérisé en ce que** le procédé comprend en outre la création, en utilisant les instructions stockées dans la mémoire (24) et exécutées par le processeur (22) du serveur d'identification (20), d'une ou plusieurs images d'origine normalisées par prétraitement d'image des une ou plusieurs images d'objet d'origine avant l'application des une ou plusieurs images d'objet d'origine comme données d'entrée à l'algorithme d'identification de base pour générer l'algorithme d'identification de référence en entraînant l'algorithme d'identification de base avec les une ou plusieurs images d'objet d'origine.

9. Procédé d'identification de l'authenticité d'un objet (700, 800, 900) selon l'une quelconque des revendications 6 à 8, **caractérisé en ce que** l'application des une ou plusieurs images d'origine normalisées comme données d'entrée à l'algorithme d'identification de base comprend :
- la génération, en utilisant les instructions du service algorithmique (26), des deux algorithmes d'identification de référence de caractéristiques ou plus pour identifier des caractéristiques distinctes de l'objet d'origine (700, 800, 900) ; ou
- la génération, en utilisant les instructions du service algorithmique (26), des deux algorithmes d'identification de référence de caractéristiques distinctes ou plus pour identifier des caractéristiques distinctes de l'objet d'origine (700, 800, 900) ; ou
- la génération, en utilisant les instructions du service algorithmique (26), de l'algorithme d'identification de référence comprenant les deux algorithmes d'identification de référence de caractéristiques ou plus pour identifier des caractéristiques distinctes de l'objet d'origine (700, 800, 900).
